# EUROPEAN PATENT APPLICATION

(11) **EP 4 112 139 A1**
(43) Date of publication of application: **04.01.2023**
(21) Application number: 21760061.8
(22) Date of filing: 25.02.2021
(51) Int. Cl.: A63B 69/00, A63B 71/06, G06Q 30/06

(54) **MOVEMENT ANALYSIS SYSTEM, SERVER, MOVEMENT ANALYSIS METHOD, CONTROL PROGRAM, AND RECORDING MEDIUM**

(30) Priority: 28.02.2020 JP 2020033836
(71) Applicant: Kyocera Corporation, Kyoto-shi Kyoto 612-8501 (JP)
(72) Inventor: SOEJIMA, Munetaka, Kyoto-shi, Kyoto 612-8501 (JP); TAKANAMI, Shun, Kyoto-shi, Kyoto 612-8501 (JP); YAMAJI, Tokuichi, Kyoto-shi, Kyoto 612-8501 (JP)
(74) Representative: TBK
(86) International application number: PCT/JP2021/007177
(87) International publication number: WO 2021/172459

(57) **Abstract**

To provide an opportunity to receive advice on equipment that is beneficial for users to improve their skill. A motion analysis system includes a movement sensor device for detecting a state of a racket, a user terminal for presenting to a user an analysis result of a movement of the racket analyzed based on detection information detected by the movement sensor device, and an adviser terminal for presenting to an adviser an advice request transmitted from the user terminal along with the analysis result and receiving input of advice information created by the adviser and corresponding to the advice request. The advice information includes recommendation information related to equipment recommended to the user.

## Description

### Technical Field

The present disclosure relates to a motion analysis system,
a server, a motion analysis method, a control program, and a recording medium for providing a service to analyze a motion.

### Background Art

There is known a technique for improving a skill of a player by attaching a sensor to a racket and analyzing movement of the racket (for example, Patent Document 1 below). Patent Document 1 discloses a technique in which an acceleration sensor and a contact sensor are provided in a racket for a table tennis.

### Citation List

### Patent Literature

Patent Document 1: JP 2009-183455 A

### Summary

A motion analysis system of an aspect of the present disclosure is a motion analysis system for providing to a user a service for analyzing a motion of the user using equipment, and includes a movement sensor for detecting a state of the equipment, a user terminal for presenting to the user an analysis result of a movement of the equipment analyzed based on detection information detected by the movement sensor, and an adviser terminal for presenting to an adviser an advice request transmitted from the user terminal along with the analysis result and receiving input of advice information created by the adviser and corresponding to the advice request, wherein the advice information includes recommendation information related to equipment to be recommended to the user.

A server of an aspect of the present disclosure is a server for mediating communication between a user terminal for presenting to a user an analysis result of a movement of equipment used by the user and an adviser terminal for presenting to an adviser an advice request transmitted from the user terminal and the analysis result and transmitting advice information corresponding to the advice request to a predetermined destination, wherein the server executes processing of transmitting the advice request to the adviser terminal in response to receiving the advice request addressed to the adviser from the user terminal, processing of transmitting the advice information to the predetermined destination in response to receiving the advice information addressed to the user from the adviser terminal, and processing of receiving, from the user terminal that has received the advice information, equipment identification information for identifying equipment for which a purchase procedure for the equipment recommended by recommendation information included in the advice information has been performed.

A motion analysis method of an aspect of the present disclosure is an analysis method for providing to a user a service for analyzing a motion of the user using equipment, and the method includes an analysis result presentation step of presenting to a user, on a user terminal, an analysis result of a movement of the equipment analyzed based on detection information detected by a movement sensor, the movement sensor being attached to the equipment and detecting a state of the equipment, an advice request presentation step of presenting to an adviser an advice request transmitted from the user terminal on an adviser terminal along with the analysis result, an advice information transmission step of transmitting, from the adviser terminal to a predetermined destination, advice information including recommendation information related to equipment to be recommended to the user, the recommendation information being created by the adviser and corresponding to the advice request, a user interface display step of displaying the advice information on a display of the user terminal along with a user interface component for performing a purchase procedure of the equipment recommended in the recommendation information included in the advice information, and a purchase procedure step of performing the purchase procedure of the recommended equipment in response to an operation of the user interface component by the user.

### Brief Description of Drawings

FIG. 1 is an overall configuration illustrating an example of a motion analysis system according to one aspect of the present disclosure.
FIG. 2 is a perspective view illustrating a configuration example of a racket to which a movement sensor device is attached.
FIG. 3 is a block diagram illustrating an example of an overall configuration of the movement sensor device and a user terminal.
FIG. 4 is a block diagram illustrating an example of the overall configuration of the user terminal.
FIG. 5 is a block diagram illustrating an example of an overall configuration of an adviser terminal.
FIG. 6 is a block diagram illustrating an example of the overall configuration of the adviser terminal.
FIG. 7 is a block diagram illustrating an example of an overall configuration of a server.
FIG. 8 is a diagram illustrating an example of a data structure of a user information DB.
FIG. 9 is a diagram illustrating an example of a data structure of a first adviser information DB.
FIG. 10 is a diagram illustrating an example of a data structure of a second adviser information DB.
FIG. 11 is a diagram illustrating an example of a data structure of a first consultation DB.
FIG. 12 is a diagram illustrating an example of a data structure of a second consultation DB.
FIG. 13 is a diagram illustrating an example of a first reward rule.
FIG. 14 is a diagram illustrating an example of a data structure of an equipment information DB.
FIG. 15 is a diagram illustrating an example of purchase records.
FIG. 16 is a diagram illustrating an example of a second reward rule.
FIG. 17 is a diagram illustrating another example of the second reward rule.
FIG. 18 is a sequence diagram illustrating an example of a flow of a user registration process.
FIG. 19 is a sequence diagram illustrating an example of a flow of an adviser registration process.
FIG. 20 is a sequence diagram illustrating an example of a flow of a main process in the motion analysis system.
FIG. 21 is a diagram illustrating an example of a display screen on the user terminal.
FIG. 22 is a diagram illustrating an example of the display screen for displaying an analysis result on a user terminal.
FIG. 23 is a diagram illustrating an example of the display screen for displaying the analysis result on the user terminal.
FIG. 24 is a diagram illustrating an example of the display screen for displaying the analysis result on the user terminal.
FIG. 25 is a diagram illustrating an example of the display screen for displaying the analysis result on the user terminal.
FIG. 26 is a diagram illustrating an example of a display screen for inputting an advice request on the user terminal.
FIG. 27 is a diagram illustrating an example of the display screen for displaying the analysis result and the advice request on an adviser terminal.
FIG. 28 is a diagram illustrating an example of a display screen for inputting advice information on the adviser terminal.
FIG. 29 is a diagram illustrating another example of the display screen for inputting advice information on the adviser terminal.
FIG. 30 is a diagram illustrating an example of a display screen for inputting recommendation information related to equipment on the adviser terminal.
FIG. 31 is a diagram illustrating an example of a display screen for presenting the advice information on the user terminal.
FIG. 32 is a diagram illustrating an example of a display screen for presenting the recommendation information on the user terminal.
FIG. 33 is a diagram illustrating an example of a display screen for displaying notification related to the advice information on the adviser terminal.

### Description of Embodiments

### First Embodiment

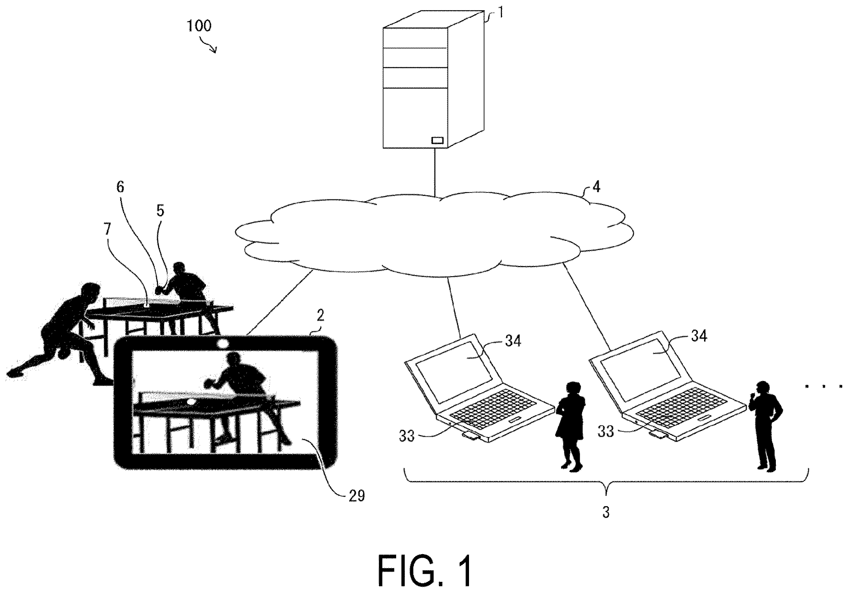

Hereinafter, an embodiment of the present disclosure will be described in detail with reference to FIGS. 1 to 33 schematically illustrated.

### Application Range of Motion Analysis System 100

First, an application range of a motion analysis system 100 according to an aspect of the present disclosure will be described. The motion analysis system 100 is, for example, a system for analyzing a movement of equipment for sports when the equipment is used, or a system for providing to a user a service for analyzing a motion of the user of moving a moving body by hitting the moving body by using the equipment.

The "equipment" is intended to be a tool moved when the user plays sports or the like, and the "moving body" is intended to be a moving object used in the sports or the like.

Examples of the equipment include rackets for tennis, badminton, table tennis, squash, and lacrosse, bats for baseball and cricket, a golf club, sticks for hockey and ice hockey, gymnastic equipment, fishing rods, and wears worn by the user. Examples of the moving body include balls used in various ball games, a shuttle of badminton, and a puck for ice hockey.

Further, cues in a billiard are also a tool for hitting a ball and may be included in the equipment. For example, a motion of kicking a ball in rugby and soccer can be regarded as a motion of hitting the ball using shoes. Thus, the shoes in rugby and soccer may also be included in the equipment.

In the following embodiment, the motion analysis system 100 for analyzing the motion of the user in order to improve the skill of the user in table tennis will be described as an example. In this case, the equipment is a racket 6 for table tennis, and the moving body is, for example, a ball 7 (also referred to as a ping-pong ball) for table tennis made of celluloid.

### Configuration of Motion Analysis System 100

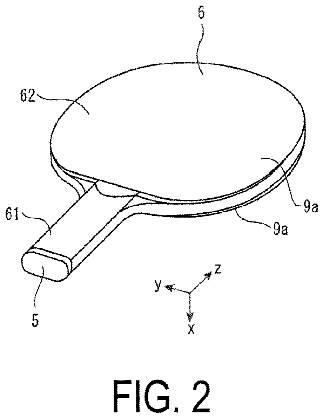

A configuration of the motion analysis system 100 will be described using FIG. 1 with reference to FIGS. 2 to 13. FIG. 1 is an overall configuration illustrating an example of the motion analysis system 100.

The motion analysis system 100 includes one or a plurality of user terminals 2, and one or a plurality of adviser terminals 3. In the motion analysis system 100, the user terminal 2 and the adviser terminal 3 are communicably connected to each other via a network 4, as illustrated in FIG. 1.

The motion analysis system 100 may include a management server 1 (server) for mediating communication between the user terminal 2 and the adviser terminal 3, as illustrated in FIG. 1.

### Racket 6 to Which Movement Sensor Device 5 is Attached

The user utilizing the motion analysis system 100 uses the racket 6 to which the movement sensor device 5 (sensor device) is attached. The movement sensor device 5 measures a movement of the racket 6 gripped by the user in real time.

FIG. 2 is a perspective view illustrating a configuration example of the racket 6 to which the movement sensor device 5 is attached. Here, the racket 6 of a shake hand type is illustrated as an example, but the racket 6 is not necessarily the shake hand type. For example, the racket 6 may be a racket having another shape, such as a pen holder type.

The racket 6 includes a hitting portion 62 for hitting the ball 7, and a grip 61 to be gripped by the user. The hitting portion 62 includes a hitting surface 9a for hitting the ball 7. The racket 6 illustrated in FIG. 2 is the shake hand type, and includes a pair of front and back hitting surfaces 9a. A rubber having various properties (for example, a repulsive sheet formed by a sponge sheet and a rubber sheet) is often disposed on the hitting surfaces 9a of the racket 6.

The grip 61 is a portion gripped by the user to manipulate the racket 6. The hitting portion 62 and the grip 61 may be integrally formed with each other.

The movement sensor device 5 is fixed to the racket 6 and functions as an inertial sensor to detect at least an angular velocity. An attachment position relative to the racket 6, shape, size, and the like of the movement sensor device 5 may be appropriately set. In the illustrated example, the movement sensor device 5 is attached to an end portion, opposite to the hitting portion 62, of the grip 61 of the racket 6, but is not limited thereto. The movement sensor device 5 may be detachable from the racket 6 or may be fixed to the racket 6 in a non-detachable manner.

### Movement Sensor Device 5 and User Terminal 2

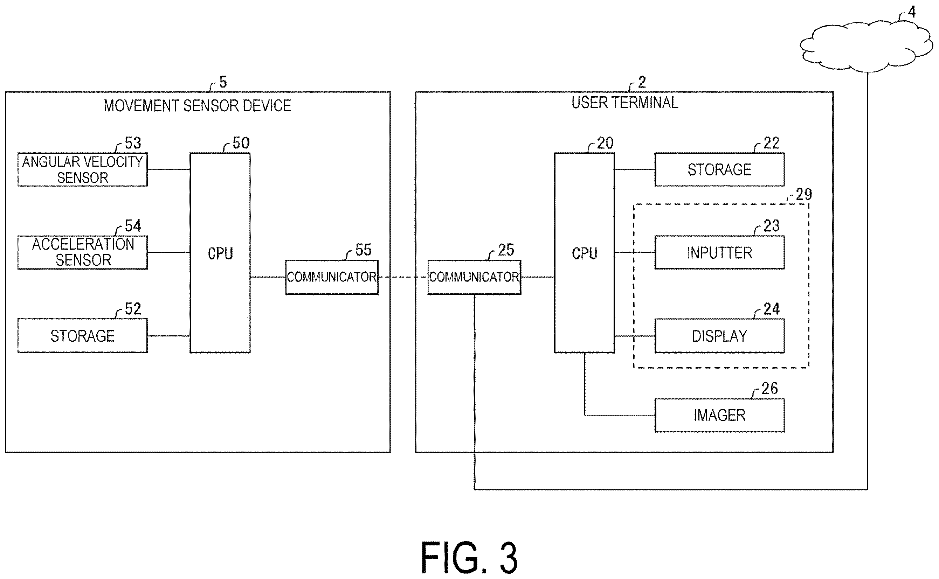

Next, the movement sensor device 5 and the user terminal 2 will be described using FIG. 3. FIG. 3 is a block diagram illustrating an example of an overall configuration of the movement sensor device 5 and the user terminal 2.

### Configuration of Movement Sensor Device 5

The movement sensor device 5 includes a storage 52, an angular velocity sensor 53, an acceleration sensor 54 for detecting acceleration of the racket 6, a communicator 55 for communicating with the user terminal 2, and a central processing unit (CPU) 50. The angular velocity sensor 53 is, for example, a gyroscope for detecting the angular velocity of the racket 6. The CPU 50 performs processing of signals to be input to or output from the angular velocity sensor 53, the acceleration sensor 54, and the communicator 55.

The storage 52 may include a read only memory (ROM),
a random access memory (RAM), an external storage device, and the like. The storage 52 stores a predetermined application program and the like executed by the CPU 50.

The angular velocity sensor 53 is constituted by a three-axis angular velocity sensor capable of detecting the angular velocity of each of three axes of the x-axis, the y-axis, and the z-axis. An example of such an angular velocity sensor includes a combination of an angular velocity sensor for detecting the angular velocity about the x-axis, an angular velocity sensor for detecting the angular velocity about the y-axis, and an angular velocity sensor for detecting an angular velocity about the z-axis.

The acceleration sensor 54 is constituted by a three-axis acceleration sensor capable of detecting acceleration in a direction along each of the three axes of the x-axis, the y-axis, and the z-axis. Any known configuration can be applied as the configuration of the three-axis acceleration sensor.

The communicator 55 has a configuration that enables communication with at least the user terminal 2. The communication may be a wired communication or a wireless communication. In the case of the wireless communication, communication using radio waves, communication using infrared rays, or the like can be applied. As the communication using radio waves, Bluetooth (registered trademark), Wi-Fi (registered trademark), or the like can be applied.

### Configuration of User Terminal 2

The user terminal 2 may include a computer, and for example, may be a smartphone or a tablet as illustrated in FIG. 1, or may be a personal computer. Any known hardware and operating system (OS) can be applied to the computer. The user terminal 2 can be obtained by installing a predetermined application program to a typical computer.

As illustrated in FIG. 3, the user terminal 2 includes a CPU 20, a storage 22, an inputter 23 for receiving various operations of the user, a display 24 for displaying an image and the like, and a communicator 25. The user terminal 2 may further include an imager 26.

The CPU 20 performs processing of signals to be input to or output from the inputter 23, the display 24, the communicator 25, and the imager 26. The storage 22 may include a read only memory (ROM),
a random access memory (RAM), an external storage device, and the like. The storage 22 stores an analysis program and the like executed by the CPU 20.

The user terminal 2 multilaterally analyzes a motion of the user based on the motion of the user and the movement of the racket 6 when the user performs the motion, and presents an analysis result to the user. FIG. 1 illustrates a state in which the motion of the user gripping the racket 6 to which the movement sensor device 5 is attached is imaged using the user terminal 2.

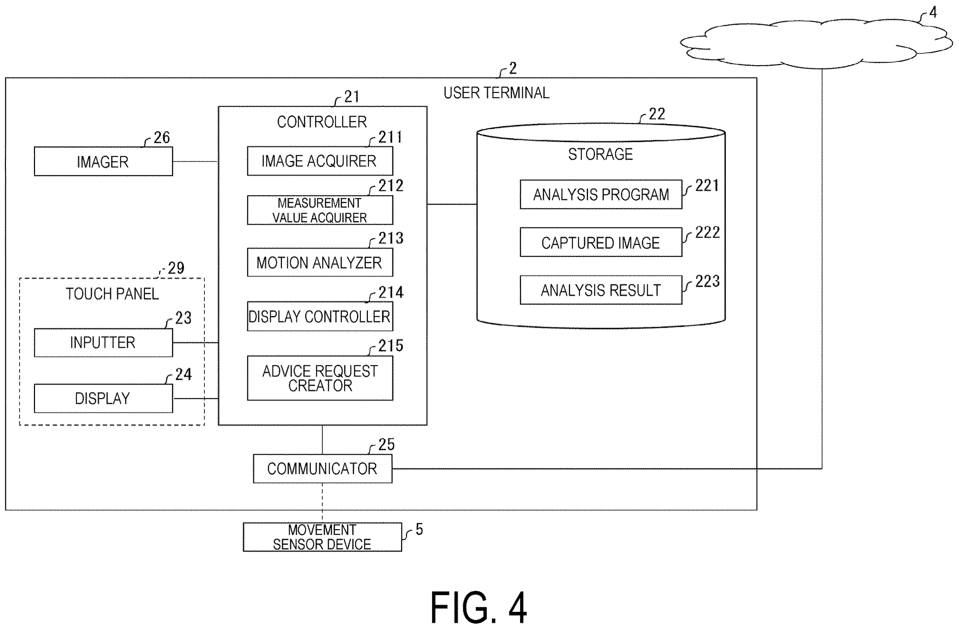

The configuration of the user terminal 2 will be more specifically described using FIG. 4. FIG. 4 is a block diagram illustrating an example of the overall configuration of the user terminal 2. A controller 21 illustrated in FIG. 4 corresponds to the CPU 20 in FIG. 3. In other words, each unit of the controller 21 is a function block implemented by executing an analysis program 221 by the CPU 20 in FIG. 3.

The user terminal 2 includes the controller 21, the storage 22, the imager 26, the inputter 23, the display 24, and the communicator 25. The controller 21 performs control so as to execute processing of each function included in the user terminal 2. The storage 22 is a storage device in which various computer programs to be read by the controller 21, data used in various processing executed by the controller 21, and the like are stored.

The controller 21 includes an image acquirer 211, a measurement value acquirer 212, a motion analyzer 213, a display controller 214, and an advice request creator 215.

The image acquirer 211 acquires image data (for example, moving image data) from the imager 26. Here, the image data is obtained by imaging a state of
the user playing table tennis using the racket 6 to which the movement sensor device 5 is attached. The image acquirer 211 may be configured to also acquire image data in which the trajectory of the ball 7 actually hit by the racket 6 gripped by the user is imaged. The image acquirer 211 may be configured to acquire image data captured by an external device (not illustrated) such as a digital camera, a digital video, or the like via the communicator 25. However, in this case, it is necessary to synchronize detection information (for example, a measurement value) received from the movement sensor device 5
with the image data imaged by the external device. The acquired image data is stored in a captured image 222 of the storage 22 along with time information for synchronization with the measurement value.

The measurement value acquirer 212 acquires the detection information detected by the movement sensor device 5 via the communicator 25. The detection information is information in any form output from the movement sensor device 5, and may be, for example, a graph representing a change in a position of the racket 6 over time, or measurement values indicating changes in the position and a posture of the racket 6 over time. The detection information includes the time information indicating the time of measurement. The measurement value acquirer 212 may store the acquired detection information in the storage 22. In the following, a case will be described as an example in which the measurement value acquirer 212 acquires the measurement values as the detection information from the movement sensor device 5.

The motion analyzer 213 analyzes the movement of the racket 6 based on the acquired measurement value. Additionally, the motion analyzer 213 synchronize the image data with the measurement value to detect an event included in the image data. The analysis result may include the movement of the racket,
an estimated trajectory and an estimated number of rotations of the ball 7 hit by the racket 6, and the movement of user's body. The motion analyzer 213 stores the analysis result in the storage 22 (analysis result 223 in FIG. 4) in association with the measurement value used for analysis and image data. Example of the event detected by the motion analyzer 213 include the fact that the ball 7 is hit by the racket 6.

The display controller 214 reads out the analysis result from the storage 22 and causes the display 24 to display the analysis result. The display controller 214 causes the display 24 to display the image data and the analysis result. Further, the display controller 214 causes the display 24 to display a screen for prompting the user to input a consultation content.

The display controller 214 may receive a web page including advice information corresponding to an advice request from the management server 1 to cause the display 24 to display the web page. The display controller 214 may cause the display 24 to display a web page including information related to the equipment recommended in recommendation information included in the advice information and a user interface (UI) component for performing a purchase procedure for the equipment.

The advice request creator 215 creates an advice request to be transmitted to the adviser, based on the consultation content input by the user. The advice request is for requesting the adviser to point out an improvement point, an improvement method, and the like with respect to the motion that the user desires to improve. By the advice request, the user can also receive proposals for equipment suitable from the adviser for his/her play style and skill. Examples of the motion that the user desires to improve include a motion of the user swinging the racket 6 for hitting the ball 7, and a posture after the user hits the ball 7. The advice request may include data of a character string representing the consultation content, audio data recording the consultation content, and the like.

The communicator 25 communicates with the movement sensor device 5, and communicates with the adviser terminal 3 and the management server 1. The advice request is transmitted to the adviser via the communicator 25 through the network 4 (for example, the Internet).

### Configuration of Adviser Terminal 3

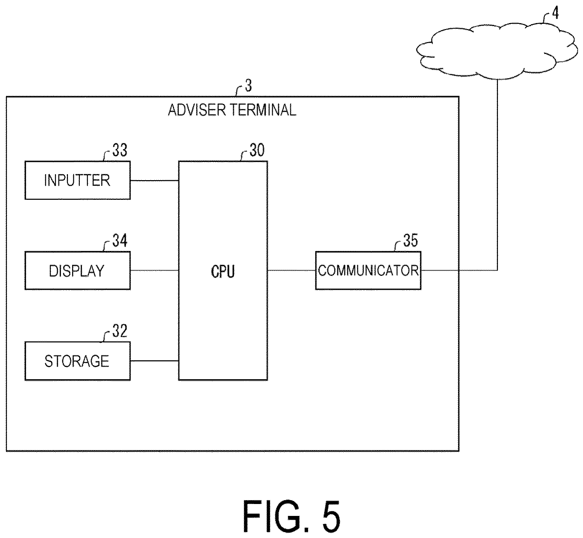

Next, a configuration of the adviser terminal 3 will be described using FIG. 5. FIG. 5 is a block diagram illustrating an example of an overall configuration of the adviser terminal 3.

The adviser terminal 3 may include a computer, and for example, may be a personal computer as illustrated in FIG. 1 and may be a smartphone or a tablet. Any known hardware and an OS of the computer can be applied. The adviser terminal 3 can be obtained by installing a predetermined application program to a typical computer.

As illustrated in FIG. 5, the adviser terminal 3 includes a CPU 30, a storage 32, an inputter 33 for receiving various operations of the adviser, a display 34 for displaying an image and the like, and a communicator 35 for communicating with the user terminal 2 and the management server 1.

The CPU 30 performs processing of signals to be input to or output from the inputter 33, the display 34, and the communicator 35. The storage 32 may include a ROM,
a RAM, an external storage device, and the like. The storage 22 stores an analysis program and the like executed by the CPU 30.

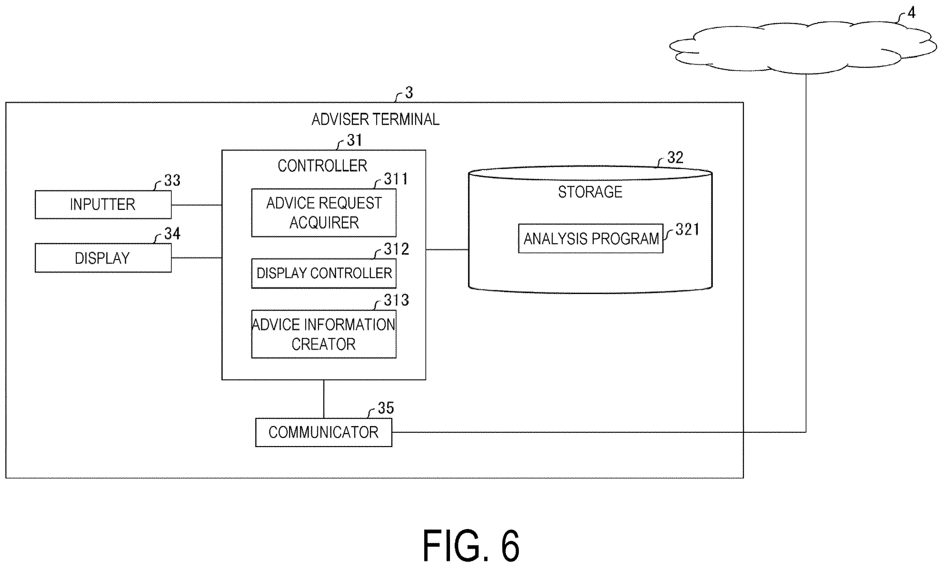

The configuration of the adviser terminal 3 will be more specifically described using FIG. 6. FIG. 6 is a block diagram illustrating an example of an overall configuration of the adviser terminal 3. A controller 31 illustrated in FIG. 6 corresponds to the CPU 30 in FIG. 5. In other words, each unit of the controller 31 is a function block implemented by executing an analysis program 321 by the CPU 30 in FIG. 5.

The adviser terminal 3 includes the controller 31, the storage 32, the inputter 33, the display 34, and the communicator 35.

The controller 31 performs control so as to execute processing of each function included in the adviser terminal 3. The storage 32 is a storage device in which various computer programs to be read by the controller 31, data used in various processing executed by the controller 31, and the like are stored.

The controller 31 includes an advice request acquirer 311, a display controller 312, and an advice information creator 313.

The advice request acquirer 311 acquires an advice request from the user terminal 2 via the communicator 35. The advice request acquirer 311 may be configured to acquire the advice request from the user terminal 2 without going through the management server 1. Alternatively, a configuration may be used in which a web page related to the advice request is acquired from the management server 1.

The display controller 312 causes the display 34 to display the acquired advice request. The display controller 312 may cause the display 34 to display the image data and the analysis result transmitted from the user terminal 2 along with the consultation content included in the advice request. The display controller 312 causes the display 34 to display the screen prompting the adviser to input the advice information as a response to the advice request from the user. The advice information may include recommendation information for proposing or recommending equipment suitable for the user. In this manner, the user can improve his/her skill by referring to the recommendation information and changing the equipment used by the user.

The display controller 312 may receive the web page for inputting the advice information corresponding to the advice request from the management server 1 and cause the display 34 to display the web page. The display controller 312 may receive, from the management server 1, a web page for inputting information related to the equipment to be recommended to the user in the recommendation information included in the advice information and cause the display 24 to display the web page.

The advice information creator 313 creates advice information to be transmitted to the user, based on the response input by the adviser. The advice information is an advice that is beneficial to improve the skill of the user, points out improvement points in the motion of the user, and proposes the change of the equipment that the user is using. The advice information may include data of a character string representing the response, audio data recording the response, or the like.

The communicator 35 communicates with the user terminal 2 and the management server 1. The advice information is transmitted to the user terminal 2 via the communicator 35 through the network 4 (for example, the Internet).

### Configuration of Management Server 1

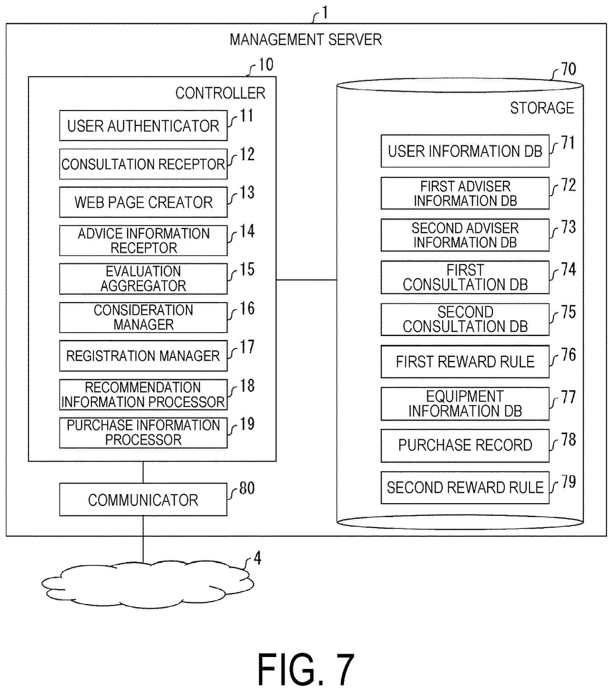

Next, a configuration of the management server 1 will be described using FIG. 7. FIG. 7 is a block diagram illustrating an example of an overall configuration of the management server 1.

The management server 1 transmits the advice request to the adviser terminal 3 in response to receiving the advice request addressed to the adviser from the user terminal 2. The management server 1 transmits received advice information to a predetermined destination in response to receiving the advice information from the adviser terminal 3. The management server 1 notifies the adviser terminal 3 of receipt of a consideration for the advice information.

Here, the "predetermined destination" may be a fixed destination or a destination specified by the user or the adviser. Examples of the destination to which the advice information is transmitted include not only the user, but also, for example, a coach of a club to which the user belongs, a manufacturer that manufactures the equipment, an a shop that sells the equipment.

For example, in a case where an adviser who has created the advice information specifies transmission of the advice information the adviser has created, the predetermined destination may be the user terminal 2 or the adviser terminal 3 of another adviser. For example, before transmitting the created advice information to the user who has transmitted the advice request, the adviser may transmit the created advice information to another adviser and request revision and check of the advice information.

The management server 1 may be configured to include a computer. Any known hardware and an OS of the computer can be applied. The management server 1 can be obtained by installing a predetermined application program to a typical computer. The controller 10 in FIG. 7 may be implemented by a CPU of the computer. In other words, each unit of the controller 10 is a function block implemented by executing the predetermined application program by the CPU.

The management server 1 includes the controller 10, a storage 70, and a communicator 80. The controller 10 performs control so as to execute processing of each function included in the management server 1. The storage 70 is a storage device in which various computer programs to be read by the controller 10, data used in various processing executed by the controller 10, and the like are stored.

The controller 10 includes a user authenticator 11, a consultation receptor 12, a web page creator 13, an advice information receptor 14, an evaluation aggregator 15, a consideration manager 16, a registration manager 17, a recommendation information processor 18, and a purchase information processor 19. The storage 70 stores a user information DB 71, a first adviser information DB 72, a second adviser information DB 73, a first consultation DB 74, a second consultation DB 75, a first reward rule 76, an equipment information DB 77, a purchase record 78, and a second reward rule 79. The management server 1 may be configured to differentiate the first adviser information DB 72 and the second adviser information DB 73 and store them into the storage 70 as illustrated in FIG. 7, or may be configured to collectively store them into the storage 70 as one adviser information DB.

### Registration Manager 17

The registration manager 17 transmits, to the user terminal 2 for registering the user information, a web page for causing a user who desires to use the motion analysis system 100 to input various types of information. The registration manager 17 stores pieces of information input by the users in the user information DB 71 in association with the user ID unique to each user.

The registration manager 17 transmits a web page for causing an adviser who uses the motion analysis system 100 to input various types of information for registering the adviser information to the adviser terminal 3. The registration manager 17 stores pieces of information input by the advisers in the storage 70 in association with adviser identification information (adviser ID) unique to each adviser.

A first adviser and a second adviser may be set as the adviser in the motion analysis system 100. The first adviser and the second adviser receive different considerations for creating the advice information corresponding to the advice request from the user and transmitting the advice information to the predetermined destination. The first adviser may include, for example, a professional table tennis player and his/her famous coach. On the other hand, the second adviser may include, for example, a coach who is teaching table tennis in various organizations, a university, or the like, and another user who is more skilled than the user who has transmitted the advice request. The consideration received by the first adviser and the consideration received by the second adviser will be described later. In a case where the first adviser and the second adviser are not particularly distinguished, they are simply referred to as "advisers" below.

The motion analysis system 100 may adopt a configuration in which an advice information creation device (not illustrated) including artificial intelligence is allowed to create the advice information. The advice information creation device may be created by machine learning by using, for example, a combination of the advice request received from the user and the advice information created by the adviser for each advice request as training data. The management server 1 may include a function as the advice information creation device. Alternatively, an external device communicably connected to the management server 1 may function as the advice information creation device.

The motion analysis system 100 may adopt a configuration in which a recommendation information creation device (not illustrated) including artificial intelligence is allowed to create the recommendation information for proposing and recommending the equipment suitable for the user based on the advice information created by the adviser. The recommendation information creation device may be created by machine learning by using, for example, a combination of the advice information received from the adviser and the recommendation information actually created in the past as the training data. The management server 1 may include a function as the recommendation information creation device. Alternatively, an external device communicably connected to the management server 1 may function as the recommendation information creation device.

### User Information DB 71

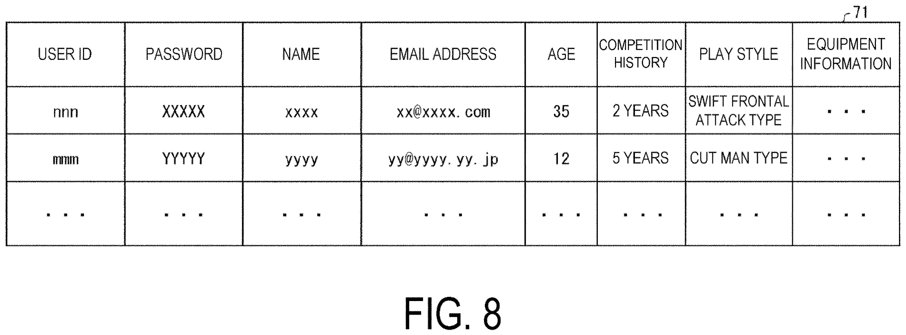

FIG. 8 is a diagram illustrating an example of a data structure of the user information DB 71. Each record of the user information DB 71 includes information such as a user ID, a password, a name, an email address, an age, a competition history, a play style of each user, and information related to equipment used by the user (referred to as "equipment information" in FIG. 8). Each record of the user information DB may include information related to physique of each user, gender, information related to dominant hand and dominant leg, information indicating the level of skill, and the like.

In FIG 8, for example, the user "xxxx" has an age of "35", a table tennis competition history of "2 years", and a play style of "swift frontal attack". A user ID of "nnn" is added and a password of "XXXXX" is set to the user "xxxx". The email address of this user is "xx@xxxx.com".

### First Adviser Information DB 72

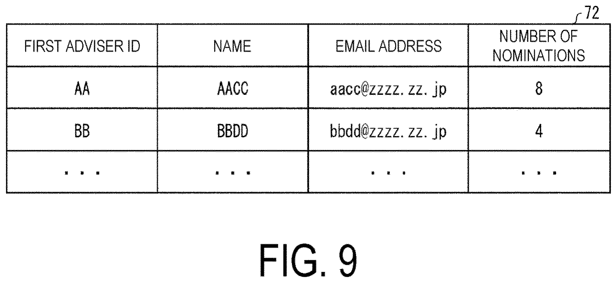

FIG. 9 is a diagram illustrating an example of a data structure of the first adviser information DB 72. Each record of the first adviser information DB 72 includes information such as a first adviser ID, a name, an email address, and the number of nominations for each first adviser. Here, the number of nominations is the number of times an adviser has been nominated, as an adviser requested to create the advice information, in the advice request from the user. In a case of a famous first adviser or a first adviser with a reputation of creating appropriate advice information, the number of nominations increases. The email address of the first adviser may be an email address owned by a business organization or a company to which the first adviser belongs, and need not be an email address individually owned by each first adviser.

In FIG. 9, for example, a first adviser ID of "AA" is added to a first adviser "AACC". This first adviser has been nominated "8" times.

### Second Adviser Information DB 73

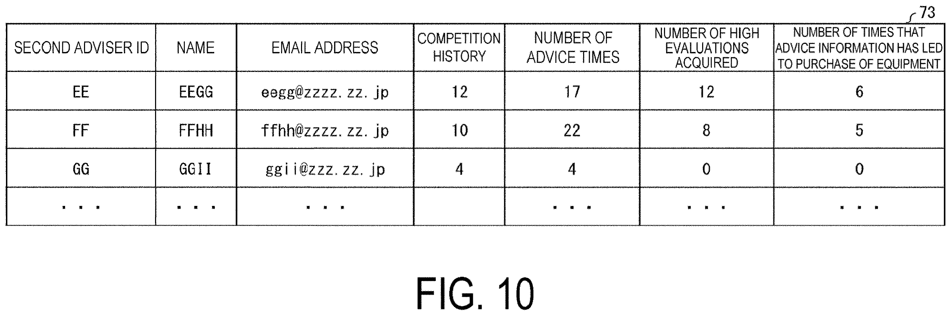

FIG. 10 is a diagram illustrating an example of a data structure of the second adviser information DB 73. Each record of the second adviser information DB 73 includes information for each second adviser, such as a second adviser ID, a name, an email address, a competition history, the number of advice times, the number of high evaluations acquired, and the number of times that the advice information has led to purchase of equipment. Here, the number of advice times is the number of times the advice information is created and transmitted in response to the advice request from the user. The number of times that the advice information has led to the purchase of equipment is the number of times that the user refers to the recommendation information of the advice information using the user terminal 2, and performs the purchase procedure of the equipment recommended in the recommendation information.

The advice information is evaluated by the user who receives the advice information. For example, the user gives the high evaluation to advice information that is carefully created and advice information that is useful with accurate content. Thus, for example, the number of high evaluations acquired per number of advice times (that is, high evaluation acquisition rate) is a numerical value indicating the degree of perfection and the degree of usefulness of the advice information corresponding to the advice request from the user.

In FIG. 10, for example, a second adviser ID of "EE" is given a second adviser "EEGG". The second adviser "EEGG" creates and transmits the advice information "17" times. The number of high evaluations acquired is "12" times. On the other hand, the second adviser "FFHH" to which a second adviser ID "FF" is given creates and transmits the advice information "22" times. The number of high evaluations acquired is "8"times. Thus, it can be seen that the second adviser "EEGG" is more excellent than the second adviser "FFHH".

Some users may be more strongly motivated to try the equipment recommended by the adviser who has created useful advice information. Alternatively, some users may wish to use equipment recommended by a well-known and influential adviser. In this way, the advice information and the adviser may be evaluated by whether the user receiving the advice information has purchased the equipment with reference to the recommendation information included in the advice information. In FIG. 10, for example, the second adviser "EEGG" has created the advice information "17" times, and the number of times that the advice information has led to the purchase of the equipment is "6" times. On the other hand, the second adviser "FFHH" has created the advice information "22" times, and the number of times that the advice information has led to the purchase of the equipment is "5" times. From this, it can be seen that the recommendation information by the second adviser "EEGG" has a stronger influence on the user than the recommendation information by the second adviser "FFHH".

The Japan Table Tennis Association has introduced a "kyu and dan ranking system" as a rating system based on the level of skill. One of grades (the highest grade is 10th dan and the lowest grade is 5th kyu) may be given to each of the user, the first adviser, and the second adviser according to a level of skill, performance at a predetermined competition, and the like. For example, the 5th kyu is given to those who can continue rally 20 times, and the 1st kyu is given to those who have acquired the right to participate in a predetermined competition. The 7th dan is given to those who wins an individual match of All Japan championship, and the 10th dan is given to those who wins the individual game of the Olympic competition. Thus, the user information DB 71, the first adviser information DB 72, and the second adviser information DB 73 may include information indicating the kyu and dan ranks given to each user, each first adviser, and each second adviser.

### User Authenticator 11

Referring back to FIG. 7, the user authenticator 11 receives authentication data from the user terminal 2, and performs authentication of the user according to the result of comparing the authentication data and the user information DB 71 in the storage 70. The authentication data is, for example, the user ID and the password unique to each user. The user authenticator 11 may transmit the web page for prompting the user to input the authentication data to the user terminal 2.

### Consultation Receptor 12

The consultation receptor 12 receives the advice request from the authenticated user. The consultation receptor 12 gives a consultation ID to each received advice request. The consultation receptor 12 stores the received advice request in the storage 70 in association with the analysis result and the like received along with the advice request. The consultation receptor 12 may be configured to store the received advice request in the first consultation DB 74 in a case where the received advice request is a consultation to the first adviser, and store the received advice request in the second consultation DB 75 in a case where the received advice request is a consultation to the second adviser.

### Web Page Creator 13

The web page creator 13 creates a web page including a consultation content in the advice request and an analysis result transmitted from the user to the adviser. The web page creator 13 creates the web page based on the advice request, a file of the image data, and a file of the analysis result, which are managed for each consultation ID.

In a case where the advice request from the user is an advice request to the first adviser, the created web page is transmitted to the first adviser nominated by the user. On the other hand, in a case where the advice request from the user is an advice request to the second adviser, the created web page is transmitted to the second adviser.

Further, the web page creator 13 creates the web page based on the advice information transmitted from the adviser terminal 3. In the created web page, the advice request transmitted from the user terminal 2 may be associated with the advice information corresponding to the advice request. For example, the web page creator 13 may create a web page to be transmitted to the user terminal 2 by adding advice information corresponding to an advice request of an consultation ID to the web page related to the advice request created for each consultation ID.

The web page creator 13 creates a web page for presenting, to the user, information related to the equipment recommended in the recommendation information included in the advice information. The information related to the equipment recommended in the recommendation information is extracted from the equipment information DB 77 by the recommendation information processor 18 described below. The web page may include the advice information and a UI component for performing the purchase procedure of the equipment recommended in the recommendation information.

### Advice Information Receptor 14

The advice information receptor 14 receives the advice information transmitted from the first adviser and the second adviser. The advice information receptor 14 adds an advice ID to each piece of the received advice information. The advice ID added to each piece of the advice information is associated with the consultation ID added to the advice request corresponding to each piece of the advice information.

For example, the advice information corresponding to the advice request addressed to the first adviser is created by the first adviser nominated by the user and transmitted to the predetermined destination. The advice ID associated with the consultation ID added to the advice request is added to each piece of the advice information transmitted from the first adviser.

For example, the advice information corresponding to the advice request addressed to the second adviser is created by the second adviser and transmitted to the predetermined destination. The advice ID associated with the consultation ID added to the advice request is added to each piece of the advice information transmitted from the second adviser.

### First Consultation DB 74

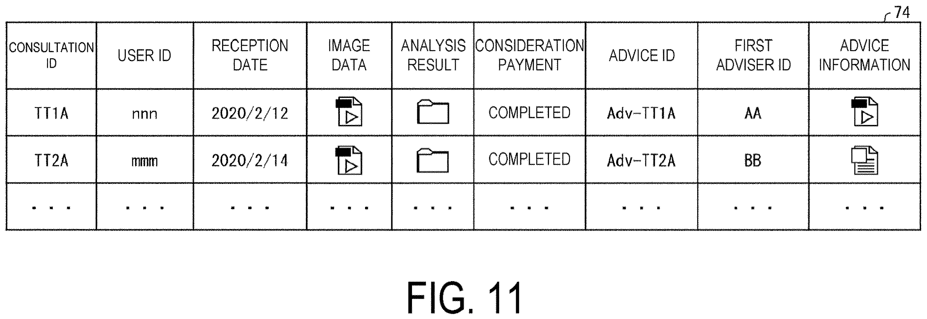

FIG. 11 is a diagram illustrating an example of a data structure of the first consultation DB74. Each record of the first consultation DB 74 includes a consultation ID added to each advice request addressed to the first adviser, a user ID of the user who has transmitted the advice request, and a reception date when the advice request has been received.

In FIG. 11, for example, a consultation ID of "TT1A" is added to an advice request, to the first adviser, received on "2020/2/12" from the user terminal 2 of a user whose user ID is "nnn". A file of the image data and a file of the analysis result transmitted from the user terminal 2 along with the advice request (the consultation ID "TT1A") are also managed as the consultation ID "TT1A".

In FIG. 11, the advice request to which the consultation ID "TT1A" is given is associated with the advice information corresponding to the advice request. The advice information is created by the first adviser having the first adviser ID of "AA", and an advice ID of "Adv-TTIA" is given to the advice information.

The advice information may include data of a character string representing a content to be explained, audio data in which the content to be explained is recorded, and the like. The advice information may include image data in which a state in which the first adviser having the first adviser ID "AA" is explaining using gestures is recorded. In FIG. 11, the advice request to which the consultation ID "TT1A" is given is the image data or the audio data, and the advice request to which the consultation ID "TT2A" is given is character string data.

### Second Consultation DB 75

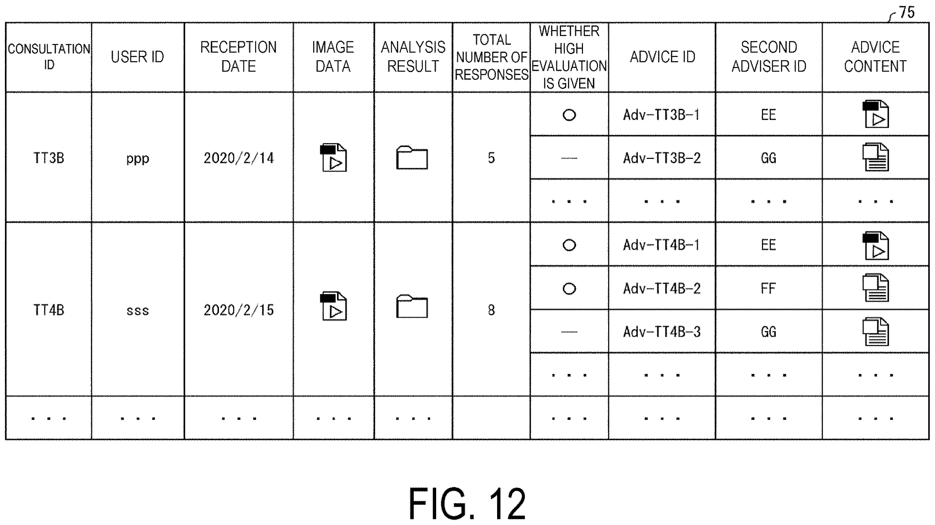

FIG. 12 is a diagram illustrating an example of a data structure of the second consultation DB 75. Each record of the second consultation DB 75 includes a consultation ID added to each advice request addressed to the first adviser, a user ID of the user who has transmitted the advice request, and a reception date when the advice request has been received.

In FIG. 12, for example, a consultation ID of "TT3B" is given to an advice request to the second adviser received on "2020/2/14" from the user terminal 2 of a user whose user ID is "ppp". A file of the image data and a file of the analysis result transmitted from the user terminal 2 along with the advice request (the consultation ID "TT3B") are also managed as the consultation ID "TT3B".

The advice request from the user to the second adviser may be distributed to a plurality of the second advisers. Thus, a plurality of pieces of the advice information may be transmitted in response to one advice request. In FIG. 12, the advice requests from the plurality of second advisers are transmitted in response to each of the advice request to which the consultation ID "TT3B" is given and the advice request to which the consultation ID "TT4B" is given.

In FIG. 12, advice information corresponding to an advice request is associated with the advice request to which the consultation ID "TT3B" is given. The advice information includes advice information created by the second adviser whose second adviser ID is "EE", advice information created by the second adviser whose second adviser ID is "GG", and the like. An advice ID of "Adv-TT3B-1" is given to the advice information created by the second adviser whose second adviser ID is "EE". On the other hand, an advice ID of "Adv-TT3B-2" is given to the advice information created by the second adviser whose second adviser ID is "GG".

### Evaluation Aggregator 15

The evaluation aggregator 15 aggregates the evaluations given to each piece of the advice information by the user who has received the advice information. The evaluation aggregator 15 may aggregate the evaluations acquired by each of the advisers in a predetermined period (for example, one year).

For example, the evaluation aggregator 15 aggregates the number of high evaluations acquired for each second adviser. The evaluation aggregator 15 updates a numerical value in a field of the "number of high evaluations acquired" in the second adviser information DB 73 in FIG. 10. The evaluation aggregator 15 may aggregate the evaluation given to each advice by the user who has received the advice information from the first adviser.

In FIG. 12, in response to the advice request to which the consultation ID "TT3B" is given, the advice information to which the advice ID "Adv-TT3B-1" is given is highly evaluated. On the other hand, the advice information to which the advice ID "Adv-TT3B-2" is given is not highly evaluated. Thus, the evaluation aggregator 15 increments, by 1, the number of high evaluations acquired by the second adviser to which the second adviser ID "EE" is given, and does not increment the number of high evaluations acquired by the second adviser to which the second adviser ID "GG" is given.

The user may give an evaluation also to the advice information by the first adviser. In this case, the evaluation aggregator 15 aggregates the evaluations given to pieces of the advice information by the first advisers for each first adviser. Each first adviser may be notified of the aggregation result aggregated by the evaluation aggregator 15. In this manner, the first adviser can create better advice information by utilizing the evaluation given by the user.

### Consideration Manager 16

The consideration manager 16 determines and manages the consideration received by the first adviser and the consideration received by the second adviser. Here, the consideration received by the first adviser may be, for example, a monetary reward paid to the first adviser each time the advice information is created and transmitted, or may be an evaluation given to the advice information by the user. The consideration received by the second adviser may be, for example, an evaluation given to the advice information by the user, or may be a monetary reward paid to the second adviser each time the advice information is created and transmitted.

In the following, a case where the consideration received by the first adviser is the monetary reward paid to the first adviser each time the advice information is created and transmitted will be described as an example.

The consideration manager 16 confirms whether the user has paid for the consideration of corresponding advice information is made for each advice request, and appropriately updates a field of "consideration payment" in the first consultation DB 74. For example, in FIG. 11, "completed" is input, which indicates completion of payment of the consideration for receiving the advice information corresponding to the advice request to which the consultation ID "TT1A" is given. If the payment of the consideration has not been confirmed yet, the consideration manager 16 inputs "incomplete" in the field of "consideration payment" in the first consultation DB74.

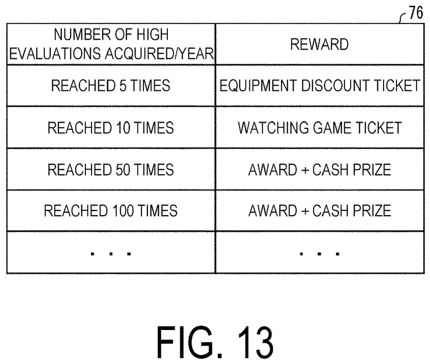

On the other hand, the consideration received by the second adviser is not necessarily the monetary reward. The consideration manager 16 may determine the consideration received by the second adviser, for example, with reference to the first reward rule 76 as illustrated in FIG. 13.

### First Reward Rule 76

FIG. 13 is a diagram illustrating an example of the first reward rule 76. The second adviser may be configured to receive a reward, for example, according to the aggregated result of the number of high evaluations acquired.

In the example illustrated in FIG. 13, a second adviser who has acquired the high evaluation from the user five times per year receives an "equipment discount ticket" that allows the second adviser to receive a discount service when purchasing equipment. A second adviser who has acquired the high evaluation from the user ten times per year receives a "watching game ticket" that allows the second adviser to watch a match between professional table tennis players (for example, a league match). A second adviser who has acquired the high evaluation from the user 50 times per year is awarded as an excellent adviser and receives a cash prize. A second adviser who has acquired the high evaluation from the user 100 times per year is awarded as the best adviser and receives a cash prize.

As described above, the second adviser can receive consideration when creating advice information highly evaluated by the user who has received the advice information. Thus, the second adviser is motivated to create more careful and accurate advice information in response to the advice request from the user. By adopting such a first reward rule 76, it is possible to avoid decrease in the quality of the advice information corresponding to the advice request from the user.

In the motion analysis system 100, the user is attracted to the advice information useful for improving his/her skill and are motivated to use the service. On the other hand, the adviser is motivated to create an attractive advice information for the user by receiving the consideration for providing the advice information to the user. Thus, the motion analysis system 100 can be a meaningful system for both the user and the adviser.

### Recommendation Information Processor 18

Referring back to FIG. 7, the recommendation information processor 18 specifies the equipment recommended to the user in the recommendation information included in the advice information. The recommendation information processor 18 extracts information related to the specified equipment from the equipment information DB 77.

### Equipment Information DB 77

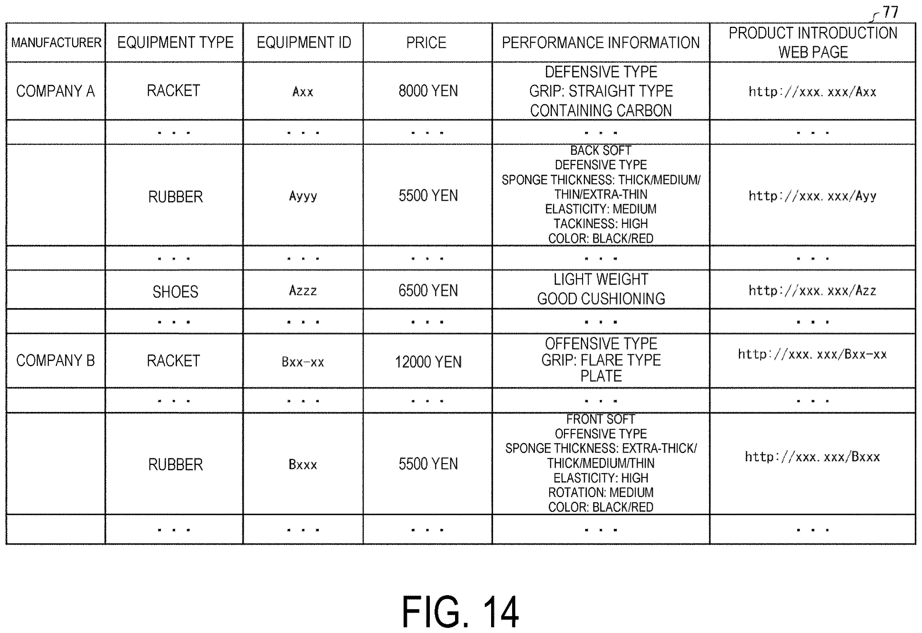

FIG. 14 is a diagram illustrating an example of a data structure of the equipment information DB 77. The equipment information DB 77 includes information related to each piece of equipment of each manufacturer. For example, each record of the equipment information DB 77 includes a manufacturer name, an equipment type, an equipment identification information (equipment ID), a price, performance information, and web page information for introducing the equipment. The equipment ID may be an identification number unique to each piece of equipment, or may be a product name unique to each piece of equipment. The price may be a price (so-called fixed price) set by the manufacturer, or may be a price (purchase price) actually paid by a user through a purchase procedure by the user.

In FIG. 14, for example, a racket of a company A, to which the equipment ID "Axx" is added, has a price of "8000 yen", and is a racket suitable for a player whose play style is a defensive type. Detailed features and performance of this racket are described in a web page ("http://xxxx. xxx/Axx"). Here, the web page ("http://xxxx. xxx/Axx") may be, for example, a web page created by the company A to introduce its own products.

### Purchase Information Processor 19

Referring back to FIG. 7, the purchase information processor 19 aggregates and manages information related to the purchase procedure of the equipment recommended in the recommendation information performed by the user. When an operation in which the user terminal 2 performs the purchase procedure is performed by the user, the purchase information processor 19 acquires, from the user terminal 2, information indicating the user, information related to the purchased equipment (including equipment identification information), and information related to the advice information referred to by the user. The purchase information processor 19 stores the acquired information in the purchase record 78.

### Purchase Record 78

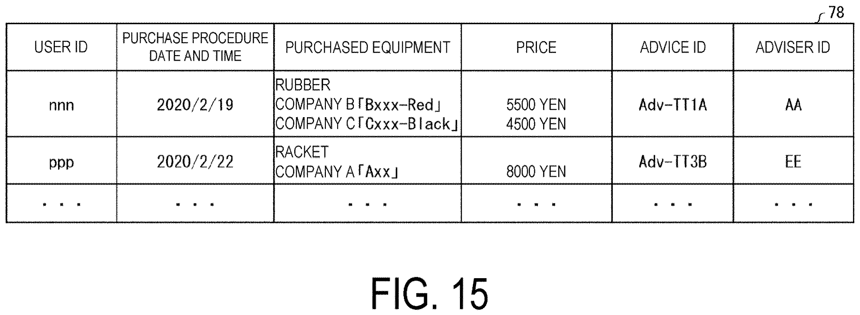

FIG. 15 is a diagram illustrating an example of the purchase record 78. The purchase record 78 includes information related to the purchase procedure performed in the user terminal 2 of each user. For example, each record of the purchase record 78 includes a user ID, a purchase procedure date and time, a name of purchased equipment (equipment identification information), purchase price, an advice ID, and an adviser ID. The advice ID is an ID assigned to the advice information including the recommendation information that prompted the user to purchase the equipment, and the adviser ID is an ID given to the adviser who created the advice information.

In FIG. 15, for example, a user, to which a user ID "nnn" is given, purchased a rubber of a company B and a rubber of a company C on "February 19, 2020". The purchased rubbers were "Bxxx-Red" (5500 yen) of the company B and "Cxxx-Black" (4500 yen) of the company C. These rubbers were purchased as a result of the user referring to advice information (of which advice ID is "Adv-TTIA") created and transmitted by an adviser to which an adviser ID "AA" is given.

The consideration manager 16 may determine and manage the consideration received by the adviser who has created the advice information including the recommendation information for the purchase, by the user, of the equipment recommended in the recommendation information. The amount of the consideration in this case depends on the adviser who is a creator of the advice information including the recommendation information that has led to the purchase of the equipment. For example, the consideration manager 16 may determine the consideration received by each adviser with reference to the second reward rule 79.

### Second Reward Rule 79

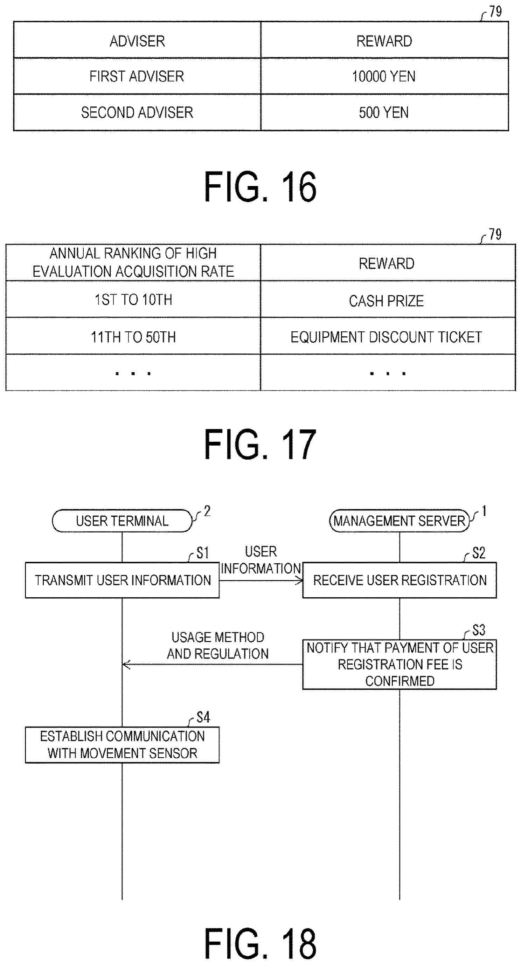

For example, equipment recommended by a famous professional player is likely to be purchased by a user. Thus, the consideration manager 16 may determine the consideration received by each adviser according to attribution of the adviser. The consideration manager 16 performs determination according to, for example, whether the adviser is the first adviser or the second adviser. In this case, the consideration manager 16 may determine the consideration received by each adviser with reference to the second reward rule 79 as illustrated in FIG. 16. In the example illustrated in FIG. 16, the consideration manager 16 determines the consideration for the first adviser to 10000 yen, and determines the consideration for the second adviser to 500 yen.

Alternatively, the consideration manager 16 may determine the consideration received by the adviser depending on the evaluations each adviser receives from users. For example, equipment recommended by an adviser who creates advice information that is highly rated by users is likely to be purchased by the users. Thus, the consideration manager 16 may determine the consideration for the adviser according to, for example, the record that the adviser has acquired high evaluations from the user. In this case, the consideration manager 16 may determine the consideration received by each adviser with reference to the second reward rule 79 as illustrated in FIG. 17. In the example illustrated in FIG. 17, the consideration manager 16 determines that the consideration for advisers whose annual high evaluation acquisition rates are ranked from 1st to 10th is a cash prize (for example, 10000 yen), and determines that the consideration for advisers whose annual high evaluation acquisition rates are ranked from 11th to 50th is an equipment discount ticket (for example, 2000 yen discount ticket).

### Flow of Registration Processing in Motion Analysis System 100

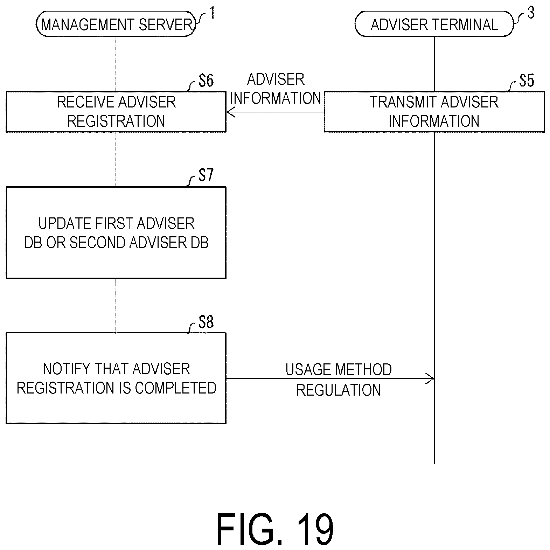

Next, a flow of a registration process in the motion analysis system 100 will be described using FIGS. 18 and 19. FIG. 18 is a sequence diagram illustrating an example of a flow of a user registration process, and FIG. 19 is a sequence diagram illustrating an example of a flow of an adviser registration process.

First, the user who desires to use the motion analysis system 100 inputs predetermined user information on a screen for user registration displayed on the user terminal 2. Next, in step S1 in FIG. 18, the user information is transmitted from the user terminal 2 to the management server 1. The management server 1 (for example, registration manager 17) stores the user information transmitted from the user terminal 2 in the user information DB 71, and receives the user registration from the user terminal 2 (step S2). The user transmits the user information from the user terminal 2 and thereafter pays a user registration fee. The management server 1 notifies that the payment of the user registration fee from the user is confirmed (step S3).

The movement sensor device 5 or the racket 6 to which the movement sensor device 5 is attached may be sent to the predetermined destination who has paid the user registration fee. The user terminal 2 establishes communication with the movement sensor device 5 by receiving a predetermined operation by the user (step S4). Accordingly, the user terminal 2 can analyze the movement of the racket 6 measured by the movement sensor device 5.

On the other hand, the first adviser and the second adviser who desire to use the motion analysis system 100 input predetermined adviser information on an adviser registration screen displayed on the adviser terminal 3. Next, in step S5 in FIG. 19, at least either first adviser information or second adviser information is transmitted from the adviser terminal 3 to the management server 1. The management server 1 (for example, registration manager 17) receives the adviser registration from the adviser terminal 3 (step S6).

The management server 1 adds the first adviser information related to the received adviser registration to the first adviser information DB 72, and updates the first adviser information DB 72 (step S7). On the other hand, the management server 1 adds the second adviser information related to the received adviser registration to the second adviser information DB 73, and updates the second adviser information DB 73 (step S7). The management server 1 notifies the adviser terminal 3 of the completion of the adviser registration (step S8). The management server 1 may be configured to receive the registration of the first adviser and the second adviser at any time.

### Flow of Main Processing in Motion Analysis System 100

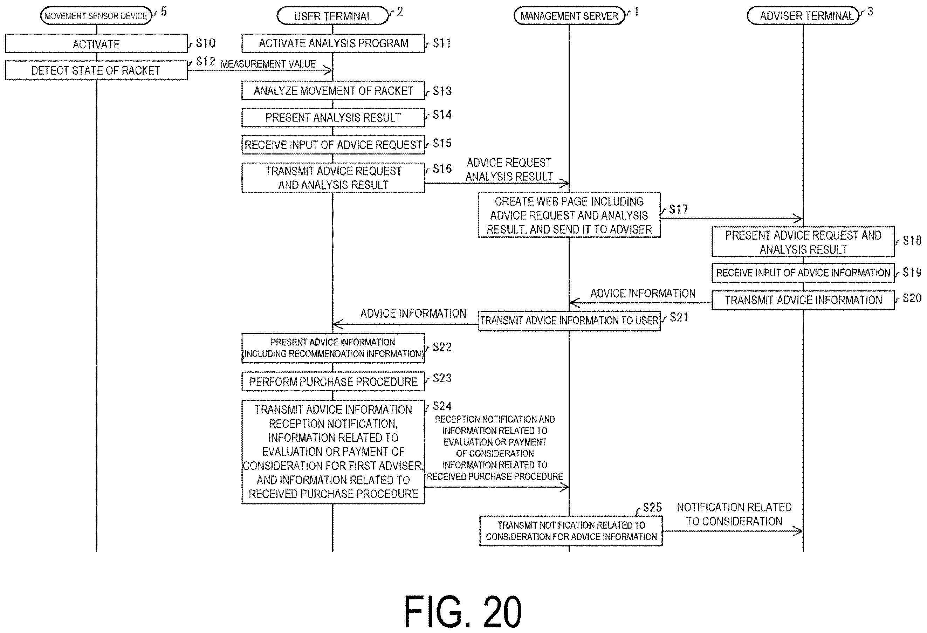

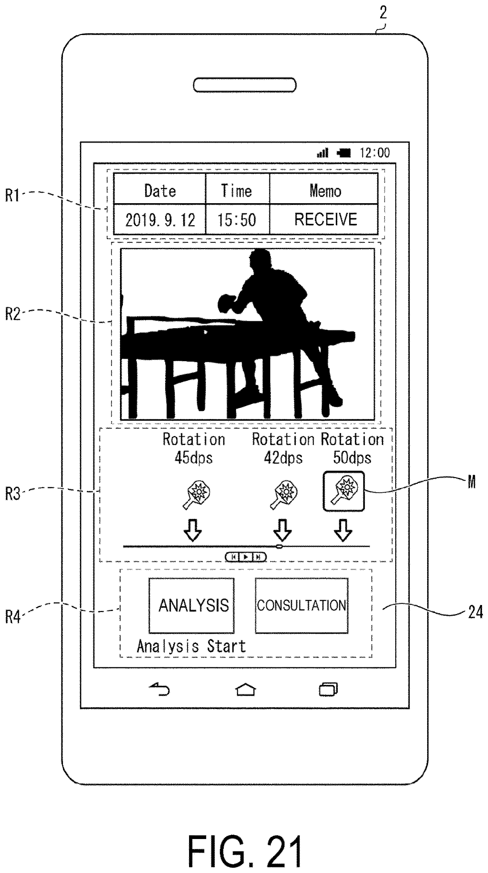

Subsequently, a flow of a main process in the motion analysis system 100 will be described using FIG. 20 with reference to FIGS. 21 to 33. FIG. 20 is a sequence diagram illustrating an example of the flow of the main process in the motion analysis system 100.

First, the movement sensor device 5 is activated by the user (step S10), and the movement sensor device 5 starts to detect the state of the racket 6 (step S12). When the analysis program 221 is activated in the user terminal 2 (step S11), the user terminal 2 (for example, the measurement value acquirer 212) starts to acquire a measurement value indicating the movement of the racket 6 from the movement sensor device 5.

The user terminal 2 (for example, the motion analyzer 213) analyzes the movement of the racket 6 by using the measurement value received from the movement sensor device 5 (step S13). Here, the user terminal 2 (the image acquirer 211) may be configured to acquire the image data which images a state in which the user plays table tennis using the racket 6 to which the movement sensor device 5 is attached. The user terminal 2 may analyze the movement and the like of the racket 6 based on the image data and the measurement value measured during the period in which the image is captured.

### Display Example of Analysis Result

FIG. 21 is a diagram illustrating an example of a display screen on the user terminal 2. As illustrated in FIG. 21, each of regions R1 to R4 is allocated to a corresponding one of display contents displayed on the display 24 of the user terminal 2.

In the region R1, information representing date and time when the image was captured, and detected main event are displayed. In FIG. 21, the date when the image was imaged is "15:50" on "September 12, 2019", and "receive" is displayed in the "Memo" field as the event detected in this moving image. In addition to "receive", detectable events include "serve", "rally", "smash", and the like. The user terminal 2 executing the analysis program 221 may include a function of detecting an event specified by the user.

In the region R2, an captured image (for example, a moving image) is displayed. In the region R3, a time bar indicating a temporal length of the image displayed in the region R2 and a mark indicating a time at which the event is detected in an image of a currently displayed image are displayed. In

FIG. 21, three marks are displayed.

In the region R3, in addition to each mark, a part of the analysis result for each event may be displayed. In FIG. 21, "Rotation 45 dps" is displayed near a first mark, "Rotation 42 dps" is displayed near a second mark, and "Rotation 50 dps" is displayed near a third mark. Each of these indicates an estimated value of the angular velocity (degree per second) of the racket 6 that is moved in the event detected at the time indicated by each mark. For example, 45 dps represents a rotation of 45° per second.

The user can select a desired event as an analysis target from the detected events. FIG. 21 illustrates a state in which a mark M representing the time of the third event is selected.

When the event of the analysis target is selected by the user, an "Analysis" button and a "Consultation" button are displayed in the region R4. In the present specification, the buttons shown in the display screen example are intended to be UI components for receiving an input operation or a selection operation by the user. When a touch operation to the "Analysis" button by the user is received, the user terminal 2 starts analysis regarding the event selected as the analysis target. The user terminal 2 presents the analysis result to the user by displaying the analysis result on the display 24 (step S14: Analysis result presentation step).

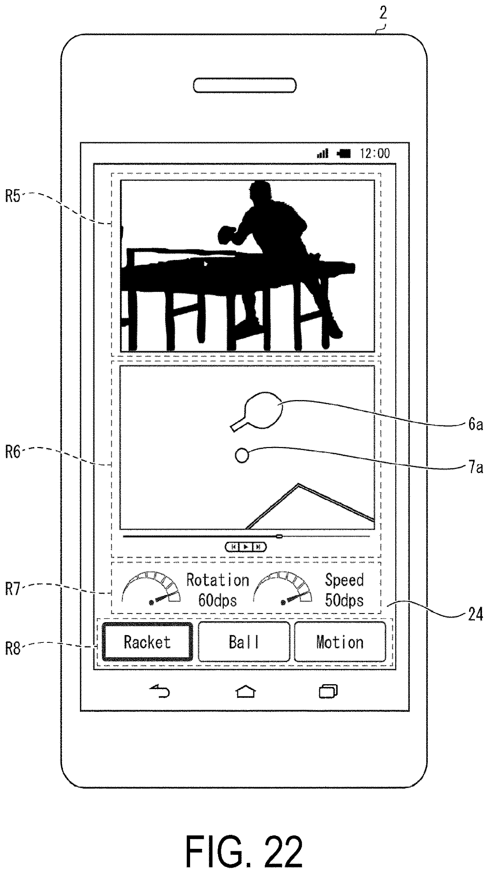

Each of FIGS. 22 to 25 is a diagram illustrating an example of the display screen for displaying the analysis result on the user terminal 2. As illustrated in FIG. 22, each of regions R5 to R8 is allocated to a corresponding one of display contents displayed on the display 24 of the user terminal 2.

In the region R8, selection keys for causing the user to select a type of the analysis result displayed on the display 24 are displayed. The example illustrated in FIG. 22 is the analysis result when "Racket" is selected.

In the region R5, a captured image (for example, a moving image) is displayed. The image is an image related to the event selected as the analysis target by the user.

In the region R6, an image (for example, an animated moving image) representing the movement of the racket 6 analyzed based on the measurement value acquired from the movement sensor device 5 is displayed. In the moving image displayed in the region R6, an image 6a representing the racket 6 is displayed along with an image 7a representing a position of the ball 7. The movement of the image 6a represents a trajectory in which the racket 6 is moved. The user terminal 2 (for example, display controller 214) can change a viewpoint of the image displayed in the region R6 to a position desired by the user.

In the region R7, the angular velocity (Rotation) at which the measured racket 6 gives rotation to the ball 7, and the angular velocity (Speed) at which the measured racket 6 gives speed to the ball 7 are displayed.

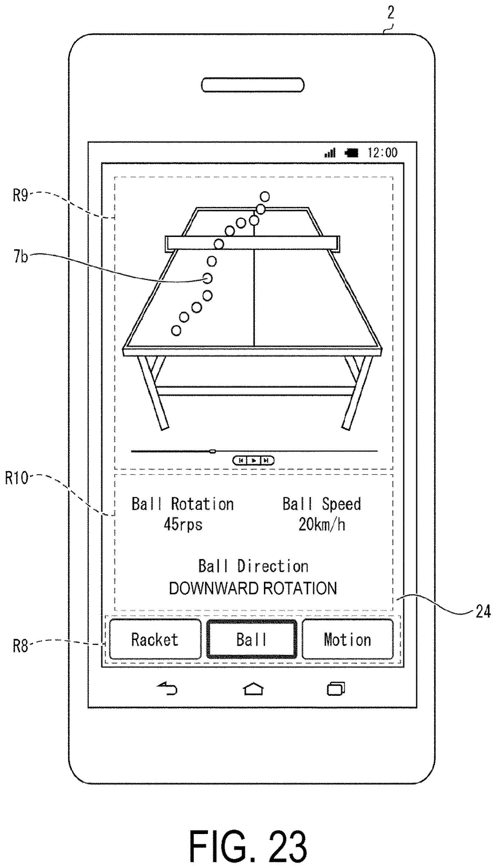

The example illustrated in FIG. 23 is the analysis result when "Ball" is selected in FIG. 22. As illustrated in FIG. 23, each of regions R9 and R10 is allocated to a corresponding one of display contents displayed on the display 24 of the user terminal 2.

In the region R9, the trajectory of the ball 7 estimated based on the analysis result by the motion analyzer 213 is displayed. An array of an image 7b schematically shows the trajectory of the ball 7 hit by the racket 6. The user terminal 2 (for example, display controller 214) can change a viewpoint of the image displayed in the region R9 to a position desired by the user.

In the region R10, an analysis result regarding a rotation speed ("Ball Rotation"), a speed ("Ball Speed"), and a rotation direction ("Ball Direction") of the ball 7 is displayed. In the example illustrated in FIG. 23, the rotational speed is "45 rps", the speed is "20 km/h", and the rotation direction is "downward rotation".

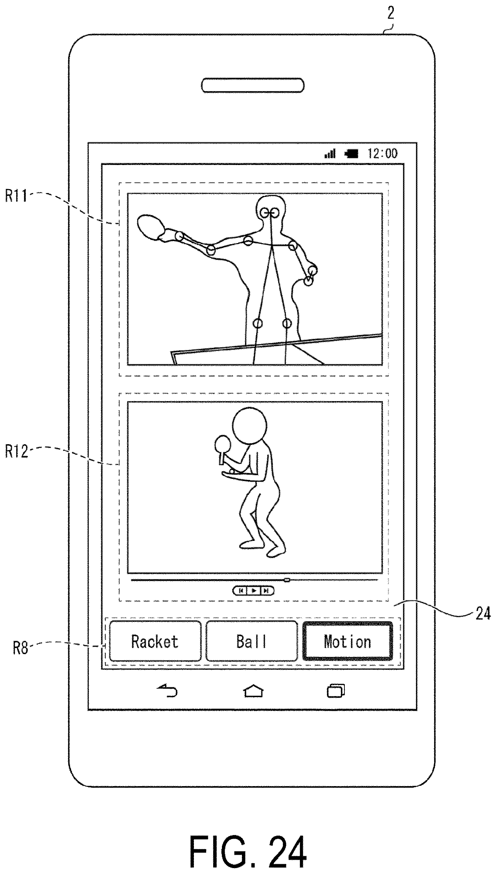

The example illustrated in FIG. 24 is the analysis result when "Motion" is selected in FIG. 22. As illustrated in FIG. 24, each of regions R11 and R12 is allocated to a corresponding one of display contents displayed on the display 24 of the user terminal 2.

In the region R11, an image captured by the user is displayed. As illustrated in FIG. 24, the user terminal 2 (for example, the display controller 214) may display an image for motion analysis (for example, an image illustrating the motion of the user with dots and lines) used by the motion analyzer 213 for analyzing the motion of the user on the image displayed in the region R11.

In the region R12, an image (for example, an animated moving image) representing the motion of the user is displayed. The user terminal 2 (for example, display controller 214) can change a viewpoint of the image displayed in the region R12 to a position desired by the user.

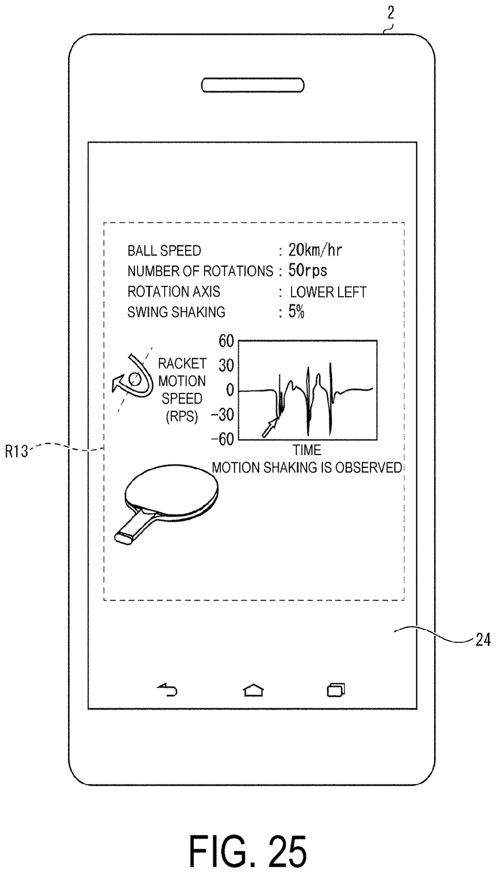

The user terminal 2 may display the analysis result as illustrated in FIG. 25. The example illustrated in FIG. 25 displays a result obtained by analyzing reproducibility of swings by the motion analyzer 213 in a case where the user repeats the same swing three times.

In the region R13, a "ball speed" which is an estimated value of the speed of the hit ball, an estimated "number of rotations" of the hit ball, and an estimated "rotation axis" of the hit ball are displayed. Furthermore, in the region R13, "swing shaking" which is an index for evaluating the stability (that is, reproducibility) of the trajectory of swinging the racket 6 by the user is displayed.

In this manner, the user terminal 2 receives the specification of the event of the analysis target, and can analyze the movement of the racket 6 in the event, the movement of the ball hit by the Racket 6, and the motion of the user in the event, and present the analysis result to the user.

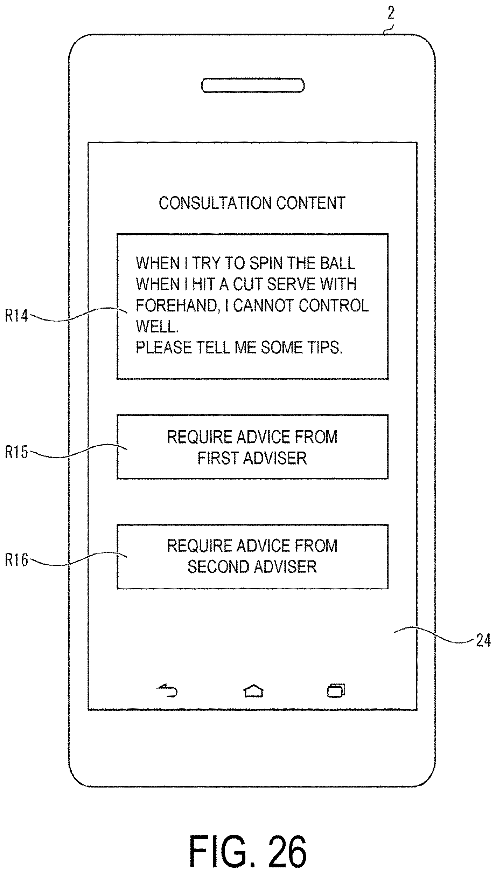

In the region R4 illustrated in FIG. 21, when receiving a touch operation to the "Consultation" button by the user, the screen transitions to a display screen (FIG. 26) for receiving input of the consultation content included in the advice request. Accordingly, the user terminal 2 can receive the input of the consultation content from the user associated with the event of the analysis target, and transmit the advice request to the management server 1.

Referring back to FIG. 20, the user terminal 2 that has presented the analysis result to the user in step S14 then receives the input of the advice request (step S15), and transmits the advice request and the analysis result to the management server 1 (step S16).

### Display Screen for Receiving Input of Advice Request

A display screen for prompting display for accepting input of the advice request will be described using FIG. 26. FIG. 26 is a diagram illustrating an example of a display screen for inputting an advice request on the user terminal 2. As illustrated in FIG. 26, each of regions R14 to R16 is allocated to a corresponding one of display contents displayed on the display 24 of the user terminal 2.

In the region R14, a field for causing the user to fill in a consultation content that the user wants to receive an advice is displayed. In the example illustrated in FIG. 26, a consultation content "When I try to spin the ball when I hit a cut serve with forehand, I cannot control well. Please tell me some tips" is input.

In the region R15 and the region R16, a button for causing the user to select a request destination for requesting the advice for the consultation content input in the field of the region R14 is displayed. In the example illustrated in FIG. 26, a button for transmitting the advice request to the first adviser is displayed in the region R15, and a button for transmitting the advice request to the second adviser is displayed in the region R16. Here, the configuration has been described, as an example, in which the user determines the request destination for requesting the advice to either the first adviser or the second adviser, but it is not limited to the configuration. For example, a configuration in which the user transmits the advice request without selecting either the first adviser or the second adviser may be adopted. In this case, when the first advice information from the first adviser is received, it is necessary to pay the consideration to the first adviser.

Referring back to FIG. 20, the management server 1 (for example, the consultation receptor 12) receives the advice request and the analysis result from the user terminal 2, and adds the consultation ID. Then, the management server 1 (for example, web page creator 13) creates a web page including the advice request, the file of the image data, and the analysis result managed for each consultation ID (step S17). The created web page may include information indicating the level of skill of the user who has transmitted the advice request, and information such as height, age, and gender of the user. However, the created web page does not include a name and a mail address of the user, which are personal information of the user.

The management server 1 transmits the created web page to the adviser terminal 3. The adviser terminal 3 (for example, the advice request acquirer 311) acquires the advice request and the analysis result. Then, the adviser terminal 3 (for example, the display controller 312) presents the advice request to the adviser along with the analysis result (step S18: Advice request presentation step).

Next, the adviser terminal 3 (for example, the advice information creator 313) receives the input of the advice information (step S19). The adviser terminal 3 transmits the advice information to the management server 1 (step S20: Advice information transmission step).

### Display Screen for Presenting Advice Request to Adviser

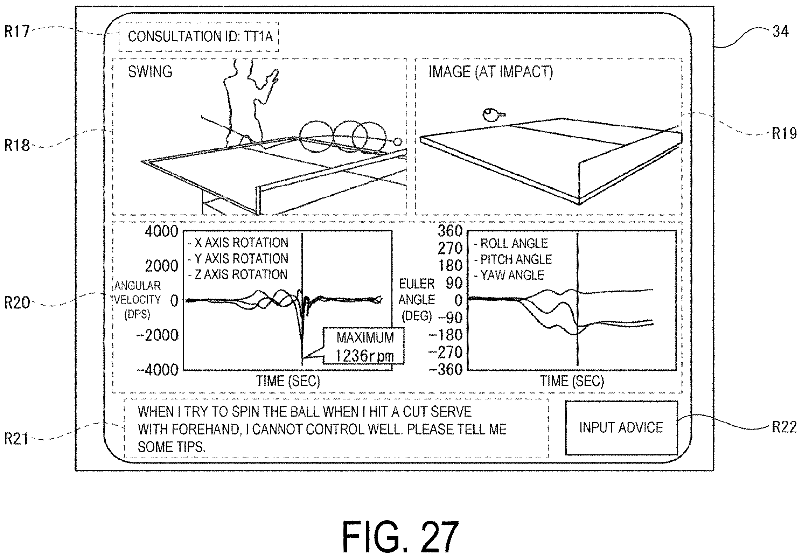

A display screen in which the advice request is displayed on the adviser terminal 3 will be described using FIG. 27. FIG. 27 is a diagram illustrating an example of the display screen for displaying an analysis result and an advice request on the adviser terminal 3. As illustrated in FIG. 27, each of regions R17 to R22 is allocated to a corresponding one of display contents displayed on the display 34 of the adviser terminal 3.

In the region R17, the consultation ID added to each advice request is displayed. In FIG. 27, a display screen related to the advice request to which the consultation ID "TT1A" is added is illustrated.

In the regions R18 to R20, the analysis results are displayed. For example, in the region R18, the analysis result of the swing motion of the racket 6 gripped by the user, and the estimated trajectory of a hit ball are displayed. In the region R19, the analysis result of the movement of the racket 6 is displayed. Image data in which the trajectory of the ball 7 actually hit by the racket 6 gripped by the user is imaged may be displayed in the region R18. In the region R20, the analysis result obtained by analyzing the movement of the Racket 6 in detail is displayed. In FIG. 27, the "angular velocity " and the "Euler angle" measured when the racket 6 is swung are illustrated.

In the region R21, the consultation content (see step S15 in FIG. 20, and FIG. 26) input by the user is displayed.

In the region R22, an "Input advice" button is displayed. When receiving the touch operation to the "Input advice" button by the adviser, the adviser terminal 3 transitions to a screen for receiving the input of the advice information corresponding to the advice request currently displayed.

According to such a configuration, the adviser can easily create accurate advice information by referring to the advice request and the analysis result presented along with the advice request. The user can receive the beneficial advice information based on the analysis result obtained by analyzing his/her motion from the adviser. Thus, it is possible to realize provision of a service having high utility value and high satisfaction for the user.

### Display Screen for Receiving Input of Advice Information

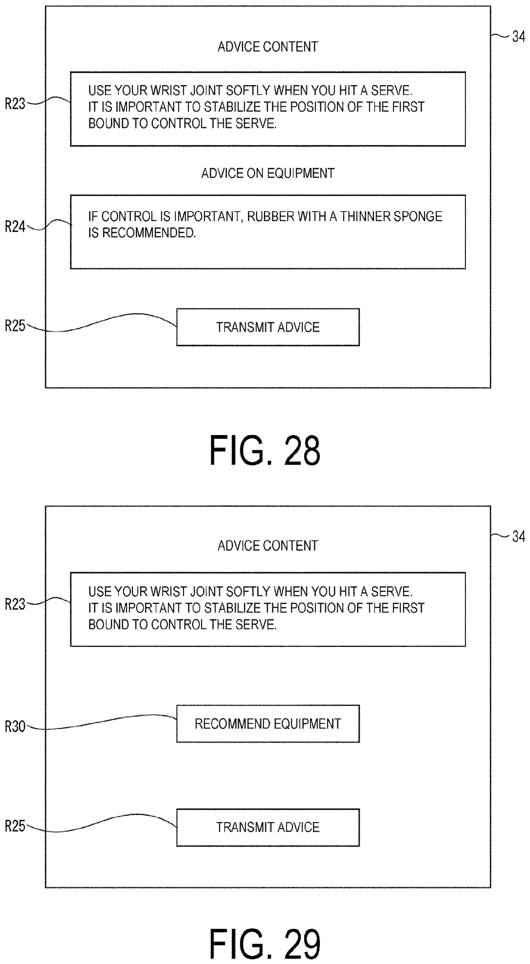

A display screen for receiving input of the advice information will be described using FIG. 28. FIG. 28 is a diagram illustrating an example of a display screen for inputting advice information on the adviser terminal 3. As illustrated in FIG. 28, each of regions R23 to R25 is allocated to a corresponding one of display contents displayed on the display 34 of the adviser terminal 3.

In the region R23, a field for causing the adviser to input an advice content is displayed. In the example illustrated in FIG. 28, an advice content of "Use your wrist joint softly when you serve. It is important to stabilize the position of the first bound to control the serve." is input.

In the region R24, a field for causing the adviser to input an advice related to the equipment is displayed. In the example illustrated in FIG. 28, the advice on the equipment, "If controlling the serve is important, a rubber with a thinner sponge is recommended." is input.

For example, there is a possibility that an adviser who has viewed the analysis result of the swing motion of the racket 6 gripped by the user and the image in which the trajectory of the ball 7 hit by the user is imaged, which are displayed in the region R18, notices the following points, and the like.
- The rubber arranged on a ball hitting surface of the racket 6 used by the user might have a problem (be deteriorated).
- Another rubber is more suitable for the user than the rubber currently used by the user. When the adviser notices the above described matters, the adviser may input in a region 24 a comment indicating the problem on the rubber and recommending the user to change to a new rubber. An example of such a comment includes "The rubber seems to be deteriorated. I recommend changing to a new rubber". Alternatively, the adviser may input a comment, in the region 24, suggesting the user to try using another rubber next time. An example of such a comment includes "Why don't you try this rubber next time? You can do XXX".

In the region R25, a "Transmit advice" button is displayed. When receiving a touch operation to the "Transmit advice" button by the adviser, the adviser terminal 3 transmits advice information including the input advice content and the like to the management server 1.

A display screen for receiving an input of the advice information including recommendation information will be further described using FIG. 29. FIG. 29 is a diagram illustrating an example of a display screen for inputting advice information on the adviser terminal 3. As illustrated in FIG. 29, each of regions R23, R30, and R25 is allocated to a corresponding one of display contents displayed on the display 34 of the adviser terminal 3.

In the region R30, a "Recommend equipment" button for transitioning to a display screen for inputting information related to the equipment to be recommended to the user is displayed. Upon receiving a touch operation to the "Recommend equipment" button by the adviser, the adviser terminal 3 transitions to a display screen for inputting recommendation information related to the equipment to be recommended to the user.

### Display Screen for Receiving Input of Recommendation Information

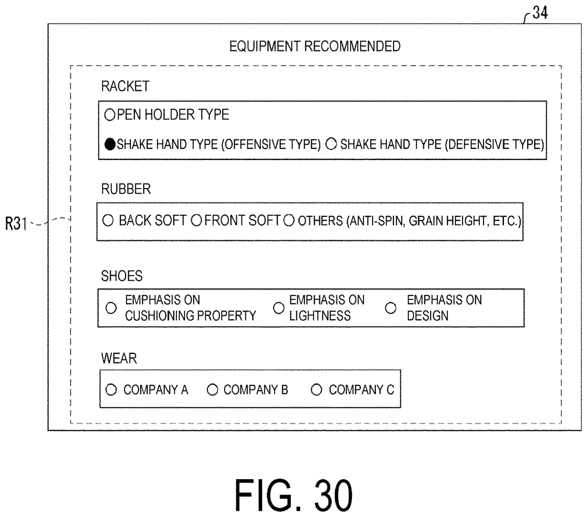

A display screen for receiving input of the recommendation information will be described using FIG. 30. FIG. 30 is a diagram illustrating an example of a display screen for inputting the recommendation information on the adviser terminal 3.

As illustrated in FIG. 30, in a region R31, the types of equipment are displayed so that the adviser can select the equipment recommended to the user. In the example illustrated in FIG. 30, "Racket", "Rubber",
"Shoes", and "Wear" are displayed as the types of the equipment. In the region R31, more detailed types are selectively displayed for each piece of equipment.

FIG. 30 illustrates an example of a case in which a shake hand type (offensive type) racket is selected by the adviser. The adviser terminal 3 creates the recommendation information based on information related to the selected equipment. The adviser terminal 3 may be configured to input information (for example, an equipment name) for indicating specific equipment to the adviser. Alternatively, the adviser terminal 3 may be configured to present an equipment list (for example, a list of commercially available equipment) so that the adviser can select specific equipment.

Referring back to FIG. 20, the management server 1 (for example, the advice information receptor 14) receives the advice information from the adviser terminal 3, and adds the advice ID to each piece of the received advice information. Furthermore, the management server 1 (for example, the web page creator 13) creates a web page based on the advice information transmitted from the adviser terminal 3. The management server 1 transmits the created web page to the user terminal 2 (step S21).

The user terminal 2 acquires the web page including the advice information from the management server 1. Then, the user terminal 2 (for example, the display controller 214) presents to the user the advice information including recommendation information (step S22: user interface display step). In step S22, the advice information is displayed on the display 24 of the user terminal 2 along with the UI component for performing the purchase procedure of the equipment recommended in the recommendation information included in the advice information.

Upon receiving a touch operation to the purchase procedure button by the user on the display screen for presenting the recommendation information, the user terminal 2 performs the purchase procedure (step S23: purchase procedure step).

Subsequently, the user terminal 2 transmits notification and information described below to the management server 1 (step S24).
- Notification of receipt of the advice information
- Information indicating the evaluation for each piece of advice information, or information related to payment of the consideration to the first adviser
- Information related to the received purchase procedure

### Display Screen for Presenting Advice Information Corresponding to Advice Request to User

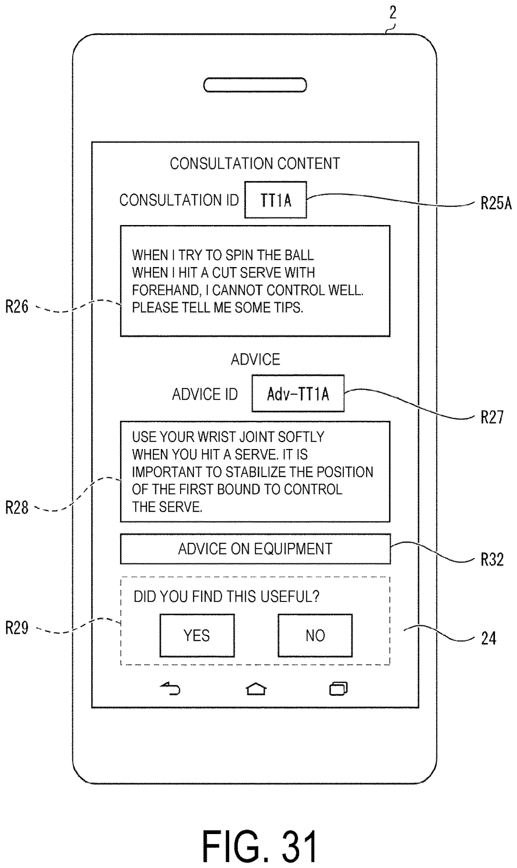

A display screen for presenting to the user the advice information corresponding to the advice request will be described using FIG. 31. FIG. 31 is a diagram illustrating an example of a display screen for presenting the advice information on the user terminal 2. As illustrated in FIG. 31, each of regions R25A to R29 and R32 is allocated to a corresponding one of display contents displayed on the display 24 of the user terminal 2.

In the region R25A, the consultation ID added to the advice request is displayed, and in the region R26, the consultation content is displayed (see FIG. 26).

In the region R27 and the region R28, information related to the advance information corresponding to the advice request to which the consultation ID "TT1A" is added is displayed. In the region R27, the advice ID added to the advice information is displayed. In the region R28, the advice information input by the adviser is displayed (see FIG. 28).

In the region R32, a button for transitioning to a screen for displaying the recommendation information included in the advice information is displayed. When receiving a touch operation to an "Advice on equipment" button by the adviser, the adviser terminal 3 transitions to a display screen for displaying the recommendation information related to the equipment to be recommended by the adviser.

### Display Screen for Presenting Recommendation Information

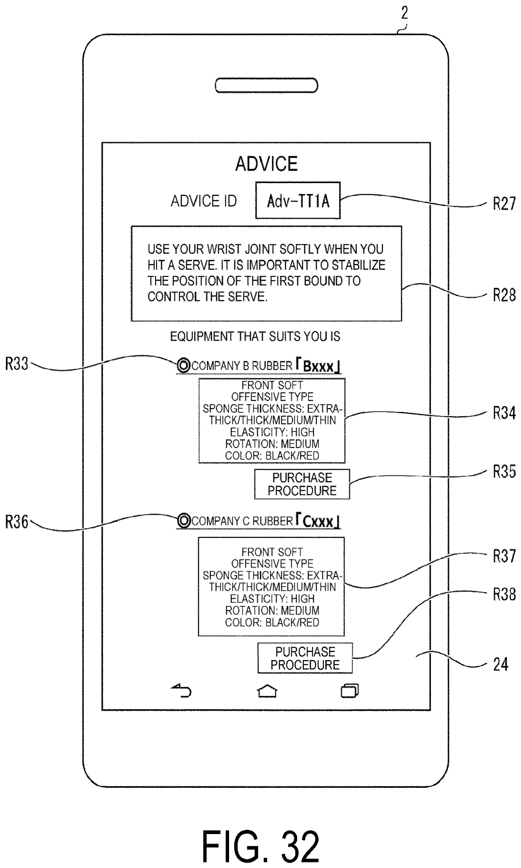

A display screen for presenting to the user the recommendation information included in the advice information will be described using FIG. 32. FIG. 32 is a diagram illustrating an example of a display screen for presenting the recommendation information on the user terminal 2. As illustrated in FIG. 32, each of regions R27, R28, and R33 to R38 is allocated to a corresponding one of display contents displayed on the display 24 of the user terminal 2. In the example illustrated in FIG. 32, an example is illustrated in which the adviser recommends two types of rubbers to the user, but is not limited thereto. For example, the adviser may recommend one type or three or more types of equipment to the user. The adviser may recommend one or a plurality of pieces of equipment, such as a racket, shoes, and a wear to the user.

In the region 27, the advice ID added to the advice information is displayed. In the region R28, the advice information input by the adviser is displayed.

In the region R33, the information related to a rubber "Bxxx", of the "Company B", to be recommended to the user by the adviser is displayed. In the region R34, features and characteristics of the rubber "Bxxxx" are displayed.

In the region R35, a button for causing the user terminal 2 to start processing of performing a procedure for purchasing the rubber "Bxxxx" is displayed. Upon receiving the touch operation to a "Purchase procedure" button by the user, the user terminal 2 causes the display 24 to display a screen for purchase procedure of the rubber. The displayed screen for the purchase procedure is a screen for causing the user to input a desired sponge thickness, a color of the rubber, the number of items to be purchased, a user's name, an address, and the like. The user terminal 2 transmits the purchase procedure information including the input information to the management server 1 or to a known shopping site. Each manufacturer or the like of the equipment receives order information based on the purchase procedure information received in the management server 1 or the known shopping site. Each manufacturer and the like of the equipment mails the specified equipment to an address input to the purchase procedure information.

In order to facilitate the selection of the rubber by the user, for example, estimated trajectories of the hit ball and the like in a case where the rubber of the "Company B" is selected and in a case where the rubber of the "Company C" is selected may be displayed on a screen, so that each case can be compared to each other. Such a screen is displayed to the user to help the user understand the performance and appeal of various pieces of commercially available equipment. Thus, the user can properly select and purchase equipment having desired performance.

The same applies to the region R36 to the region R38. In the region R36, the information related to a rubber "Cxxx" of the "Company C" recommended to the user by the adviser is displayed. In the region R37, features and characteristics of the rubber "Cxxxx" are displayed. In the region R38, a button for causing the user terminal 2 to start processing of performing a procedure for purchasing the rubber "Cxxxx" is displayed.

Referring back to FIG. 31, in the region R29, a field or a button for receiving input of the evaluation for the advice information displayed in the regions R27 and R28 is displayed. IN the example illustrated in FIG. 31, an "Yes" button and a "No" button are displayed along with a question "Did you find this useful?".

When receiving a touch operation to the "Yes" button by the user, the user terminal 2 notifies the management server 1 that the advice information has been highly evaluated. On the other hand, when receiving a touch operation to the "No" button by the user, the user terminal 2 does not notify the management server 1. By configuring in this manner, the management server 1 (for example, the evaluation aggregator 15) can aggregate the evaluations from the users for each piece of the advice information.

Referring back to FIG. 20, the management server 1 (for example, the consideration manager 16) transmits notification and information related to the consideration for the advice information to the adviser terminal 3 (step S25). The notification and information related to the consideration for the advice information may include the following.
- A notification of receipt of the consideration for the advice information (for example, the evaluation for the advice information or the consideration for the first adviser)
- Notification related to the consideration for purchase of the equipment by the user who refers to the recommendation information.

### Display Screen for Presenting to Adviser Notification Related to Advice Information

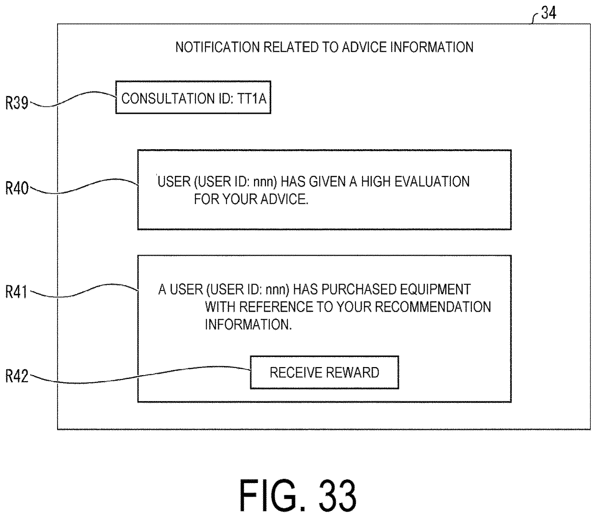

A display screen for presenting to the adviser the notification related to the advice information will be described using FIG. 33. FIG. 33 is a diagram illustrating an example of a display screen for presenting the advice information on the adviser terminal 3. As illustrated in FIG. 33, each of regions R39 to R42 is allocated to a corresponding one of display contents displayed on the display 34 of the adviser terminal 3. FIG. 33 illustrates an example of a display screen in a case where notification that a high evaluation is given by the user, and notification related to the consideration for purchase of the equipment by the user who refers to the recommendation information are included.

In a region R39, the consultation ID added to the advice request from the user for which the advice information has been created by the adviser is displayed. In the region R39, the advice ID added to the advice information provided to the user by the adviser may be displayed as an alternative to the consultation ID.

In a region R40, notification that a high evaluation is given by the user is displayed. In the example illustrated in FIG. 33, a message "The user (User ID: nnn) gave a high evaluation to your advice." is displayed in the region R40.

In the region R41, notification related to the consideration for purchase of the equipment by the user is displayed. In the example illustrated in FIG. 33, a message "The user (User ID: nnn) purchased equipment with reference to the recommendation information from you." is displayed in the region R41. Along with this message, in the region R41, a "Receive reward" button for prompting the adviser for receiving the consideration is displayed. Upon receiving a touch operation to the "Receive reward" button by the adviser, the adviser terminal 3 performs processing of receiving the consideration.

### Second Embodiment

Another embodiment of the present disclosure will be described below. For convenience of description, a member having the same function as that of a member described in the embodiments described above is denoted by the same reference sign, and description thereof will not be repeated.

In the motion analysis system 100, the management server 1 (server) for mediating communication between the user terminal 2 and the adviser terminal 3 is not an essential configuration. For example, a configuration in which the user terminal 2 and the adviser terminal 3 directly communicate with each other may be used. In this case, the advice request is directly transmitted from the user terminal 2 to the adviser terminal 3. Further, the adviser creates the advice information corresponding to the received advice request and may directly return the advice information to the user terminal 2.

Further, the evaluation for the advice information by the user or information related to the payment of the consideration for the first adviser may also be directly transmitted from the user terminal 2 to the adviser terminal 3.

### Supplementary Note

In the above-described embodiments, the case is described as an example in which the first adviser and the second adviser receive different considerations for providing the advice information to the user. However, the number of types of the advisers is not limited to this. For example, the number of advisers may be set in accordance with the number of types of the consideration received by the advisers. In other words, only one or three or more types of the advisers may be set.

### Implementation Example by Software

A control block (particularly, the controller 21) of the user terminal 2 and a control block (particularly, the controller 31) of the adviser terminal 3 may be implemented by a logic circuit (hardware) formed in an integrated circuit (IC chip) or the like, or may be implemented by software.

In the latter case, the user terminal 2 and the adviser terminal 3 include a computer that executes instructions of a program that is software for implementing each function. The computer includes, for example, one or more processors and a computer-readable recording medium that stores the above program. Then, in the computer, the processor reads the above program from the recording medium and executes the read program to achieve the object of the present disclosure. As the processor, a CPU can be used, for example. As the recording medium, a "non-transitory tangible medium" such as, for example, a ROM, a tape, a disk, a card, a semiconductor memory, a programmable logic circuit, and the like can be used. Additionally, a RAM for loading the above program may be further provided. The above program may be supplied to the computer via any transmission medium (communication network, broadcast wave, and the like) capable of transmitting the program. One aspect of the present disclosure may be implemented in the form of data signals embedded in a carrier wave in which the above program is embodied by electronic transmission.

Similar to the control blocks of the user terminal 2 and the adviser terminal 3, the control blocks (particularly, the controller 10) of the management server 1 may be implemented by the logic circuit (hardware) formed in the integrated circuit (IC chip) or the like or may be implemented by the software.

The present disclosure is not limited to each of the embodiments described above, and various modifications can be made within the scope indicated by the claims, and an embodiment obtained by appropriately combining technical means disclosed in different embodiments is also included in a technical scope of the present disclosure.

### Supplementary Note

The motion analysis system 100, the management server 1, and the motion analysis method according to the embodiments described in the present disclosure can be described as described below.
<1> A motion analysis system (100) according to a first aspect of the present disclosure is a motion analysis system (100) for providing to a user a service for analyzing a motion of the user moving a moving body (ball 7) by hitting the moving body (ball 7) by using equipment (racket 6), and the motion analysis system (100) includes a movement sensor (movement sensor device 5) attached to the equipment (racket 6) and detecting a state of the equipment (racket 6), a user terminal (2) for presenting to the user an analysis result of a movement of the equipment (racket 6) analyzed based on a measurement value acquired by the movement sensor (movement sensor device 5), and an adviser terminal (3) for presenting to an adviser an advice request transmitted from the user terminal (2) along with the analysis result, wherein the adviser terminal (3) executes processing of transmitting advice information including recommendation information created by the adviser and corresponding to the advice request to the user, the user terminal (2) executes processing of displaying the advice information received from the adviser terminal (3) on a display (24) of the user terminal (2) along with a user interface component for performing a purchase procedure of the equipment recommended in the recommendation information included in the advice information, and processing of performing a purchase procedure of the recommended equipment in response to an operation of the user interface component by the user.
   According to the configuration described above, the advice request from the user is provided to the adviser along with the analysis result obtained by analyzing the motion of the user. The advice information corresponding to the advice request from the user is created by the adviser and transmitted to the user. The advice information includes recommendation information of the equipment. The user terminal (2) displays to the user the advice information and the user interface component for performing the purchase procedure of the equipment recommended in the recommendation information included in the advice information. Then, the user terminal (2) executes processing of performing the purchase procedure of the recommended equipment in response to the operation of the user interface component by the user.
   The user tends to want to purchase the equipment recommended in the recommendation information included in the beneficial advice information. The motion analysis system (100) adopting the configuration described above presents the user interface component for performing the purchase procedure of the equipment recommended in the recommendation information at an appropriate timing at which the user's willingness to purchase is increased. Accordingly, it is possible to assist the operation of the user so that the purchase procedure of the equipment recommended in the recommendation information proceeds smoothly, and the advice can easily lead to the purchase of the equipment.
<2> In the first aspect described above, the motion analysis system (100) according to a second aspect of the present disclosure further includes a server (management server 1) for mediating communication between the user terminal (2) and the adviser terminal (3), wherein the server (management server 1) may execute processing of transmitting the advice request to the adviser terminal (3) in response to receiving the advice request addressed to the adviser from the user terminal (2), processing of transmitting the advice information to the user terminal (2) in response to receiving the advice information addressed to the user from the adviser terminal (3), and processing of receiving, from the user terminal (2), equipment identification information for identifying the equipment for which the purchase procedure is performed.
   According to the configuration described above, the server (management server 1) mediates the communication between the user terminal (2) and the adviser terminal (3). Thus, for example, a hardware resource (movement sensor) and/or a software resource (application program) for analyzing the motion of the user can be supplied via the server (management server 1). Thus, a charging system capable of recovering a cost for providing the hardware resource and/or the software resource can be suitably constructed.
   In addition, by adopting this configuration, the transmission of the advice request from the user to the adviser, and the transmission of the advice information created by the adviser to the user can be performed via the server (management server 1). Furthermore, the management of the consideration paid to the adviser who has created the advice information can also be perfumed via the server (management server 1). For example, the server (the management server 1) can suitably execute processing of collecting a fee from the manufacturer of the equipment in return for the fact that the advice information of the adviser has led to sales of the equipment.
<3> In the second aspect described above, in the motion analysis system (100) according to a third aspect of the present disclosure, the server (management server 1) may further execute processing of receiving, from the user terminal (2), adviser identification information for identifying the adviser who has created the advice information including the recommendation information of the equipment for which the purchase procedure has been performed.
   In the motion analysis system (100), an adviser who has contributed to the sales of the equipment may be specified. When adopting the configuration described above, it is possible to take measures such as providing each adviser who has created the advice information with a reward according to the degree of contribution to the sales of the equipment. Accordingly, it is possible to strongly motivate the adviser to create useful and convincing advice information for the user.
<4> In the second or the third aspect described above, in the motion analysis system (100) according to a fourth aspect of the present disclosure, in a case where the purchase procedure is performed in the user terminal (2), the adviser terminal (3) may execute processing of presenting, to the adviser, receipt of a consideration for the fact that the advice information has led to the purchase of the equipment.
   The fact that the user's evaluation of the advice information is increased and the equipment recommended to the user in the recommendation information is purchased by the user leads to an increase in motivation for the adviser. In the motion analysis system (100) adopting the configuration described above, the adviser receives the consideration for the fact that the advice information has led to the purchase of the equipment. Thus, the advisers are motivated to try to create useful and convincing advice information for the user.
   Additionally, the adviser can improve the skill of the user and contribute to sales of the equipment by positively recommending appropriate equipment to the user. As a result, since it is expected that the quality of the advice action is improved, high quality advice is maintained, the equipment is well known, and the sales of the equipment is promoted, the motion analysis system that provides the service having high utility value for the user can be constructed.
<5> In the fourth aspect described above, in the motion analysis system (100) according to a fifth aspect of the present disclosure, the amount of the consideration may depend on attribution of the adviser who is a creator of the advice information including the recommendation information that has led to the purchase of the equipment.
   For example, the advice information by the adviser highly evaluated has a high appealing effect to the user. Additionally, the advice information by a famous professional player has a further high appealing effect. Thus, in the motion analysis system (100) adopting the configuration described above, the amount of the consideration for the fact that the advice information has led to the purchase of the equipment defers according to the attribution of the adviser. With this configuration, the adviser is strongly motivated to provide high quality advice so as to increase his/her evaluation in order to increase the value, in other words the consideration, of his/her advice information. As a result, since it is expected that the quality of the advice action is improved, and high quality advice is maintained, the motion analysis system that provides the service having high utility value for the user can be constructed.
<6> A server (management server 1) according to a sixth aspect of the present disclosure is a server (management server 1) for mediating communication between a user terminal (2) for presenting to a user an analysis result of a movement of equipment for moving a moving body (ball 7) by hitting the moving body (ball 7) and an adviser terminal (3) for presenting to an adviser an advice request transmitted from the user terminal (2) and the analysis result and transmitting advice information corresponding to the advice request to the user, wherein the server (management server 1) executes processing of transmitting the advice request to the adviser terminal (3) in response to receiving the advice request addressed to the adviser from the user terminal (2), processing of transmitting the advice information to the user terminal (2) in response to receiving the advice information addressed to the user from the adviser terminal (3), and processing of receiving, from the user terminal (2), equipment identification information for identifying equipment for which a purchase procedure for the equipment recommended by recommendation information included in the advice information has been performed. According to the above configuration, the same effect as that of the above second aspect is obtained.
<7> A motion analysis method according to a seventh aspect of the present disclosure is a motion analysis method for providing to a user a service for analyzing a motion of the user moving a moving body (ball 7) by hitting the moving body (ball 7) by using equipment, and the method includes an analysis result presentation step of presenting an analysis result of a movement of equipment (racket 6) analyzed based on a measurement value acquired by a movement sensor (movement sensor device 5) to the user on a user terminal (2), the movement sensor (movement sensor device 5) being attached to the equipment (racket 6) and detecting a state of the equipment (racket 6), an advice request presentation step of presenting an advice request transmitted from the user terminal to an adviser on an adviser terminal (3) along with the analysis result, an advice information transmission step of transmitting, from the adviser terminal (3) to the user, advice information including recommendation information related to equipment to be recommended to the user, the recommendation information being created by the adviser and corresponding to the advice request, a user interface display step (S22) of displaying the advice information on a display (24) of the user terminal (2) along with a user interface component for performing a purchase procedure of the equipment recommended in the recommendation information included in the advice information, and a purchase procedure step (S23) of performing the purchase procedure of the recommended equipment in response to an operation of the user interface component by the user. According to the above configuration, the same effect as that of the above first aspect is obtained.

The user terminal (2), the adviser terminal (3), and the server (management server 1) of the motion analysis system according to each aspect of the present disclosure may be implemented by a computer, and in this case, a control program, of the user terminal (2), the adviser terminal (3), and the server (management server 1), for causing the computer to implement the motion analysis system by causing the computer to operate as each unit (software element) of the user terminal (2), the adviser terminal (3), the server (management server 1), and a computer readable recording medium in which the control program is recorded also fall within the scope of the present disclosure.

### Reference Signs List

1 Management server (server)
2 User terminal
3 Adviser terminal
5 Movement sensor device (movement sensor)
6 Racket (equipment)
7 Ball (moving body)
24 Display
100 Motion analysis system
S14 Analysis result presentation step
S18 Advice request presentation step
S22 User interface display step
S23 Purchase procedure step

## Claims

1. A motion analysis system configured to provide, to a user, a service configured to analyze a motion of the user using equipment, the motion analysis system comprising:
a movement sensor configured to detect a state of the equipment;
a user terminal configured to present, to the user, an analysis result of a movement of the equipment analyzed based on detection information detected by the movement sensor; and
an adviser terminal configured to present, to an adviser, an advice request transmitted from the user terminal along with the analysis result and to receive input of advice information created by the adviser and corresponding to the advice request, wherein
the advice information comprises recommendation information related to equipment recommended to the user.

2. The motion analysis system according to claim 1, wherein
the adviser terminal transmits the advice information to a predetermined destination.

3. The motion analysis system according to claim 1 or 2, wherein
the user terminal executes processing of displaying the advice information received from the adviser terminal on a display of the user terminal along with a user interface component configured to perform a purchase procedure of the equipment recommended in the recommendation information comprised in the advice information, and
processing of performing a purchase procedure of the recommended equipment in response to an operation of the user interface component by the user.

4. The motional analysis system according to any one of claims 1 to 3, wherein
the equipment is used by the user to hit a moving body.

5. The motion analysis system according to any one of claims 1 to 4, further comprising:
a server configured to mediate communication between the user terminal and the adviser terminal, wherein
the server executes
processing of transmitting the advice request to the adviser terminal in response to receiving the advice request addressed to the adviser from the user terminal,
processing of transmitting the advice information to a predetermined destination in response to receiving the advice information from the adviser terminal, and
processing of receiving, from the user terminal, equipment identification information for identifying the equipment recommended in the recommendation information comprised in the advice information and for which a purchase procedure has been performed.

6. The motion analysis system according to claim 5, wherein
the server further executes processing of receiving, from the user terminal, the adviser identification information configured to identify the adviser who has created the advice information comprising the recommendation information of the equipment for which the purchase procedure has been performed.

7. The motion analysis system according to claim 5 or 6, wherein,
in a case where the purchase procedure is performed in the user terminal, the adviser terminal executes processing of presenting, to the adviser, receipt of a consideration for the advice information led to the purchase of the equipment.

8. The motion analysis system according to claim 7, wherein
the amount of the consideration depends on attribution of the adviser who is a creator of the advice information comprising the recommendation information led to the purchase of the equipment.

9. A server configured to mediate communication between a user terminal configured to present, to a user, an analysis result of a movement of equipment used by the user, the adviser terminal configured to present, to an adviser, an advice request transmitted from the user terminal and the analysis result and to transmit advice information corresponding to the advice request to a predetermined destination, wherein
the server executes
processing of, in response to receiving an advice request from the user terminal, transmitting the advice request to the adviser terminal,
processing of, in response to receiving the advice information from the adviser terminal, transmitting the advice information to the predetermined destination, and
processing of receiving, from the user terminal that has received the advice information, equipment identification information for identifying the equipment recommended by recommendation information comprised in the advice information and for which a purchase procedure has been performed.

10. The server according to claim 9, wherein
the equipment is used by the user to hit a moving body.

11. A motion analysis method for providing, to a user, a service configured to analyze a motion of the user using equipment, the method comprising:
an analysis result presentation step of presenting to the user on a user terminal, an analysis result of a movement of the equipment analyzed based on detection information detected by a movement sensor, the movement sensor being attached to the equipment and configured to detect a state of the equipment;
an advice request presentation step of presenting to an adviser on an adviser terminal, an advice request transmitted from the user terminal along with the analysis result;
an advice information transmission step of transmitting, from the adviser terminal to a predetermined destination, advice information comprising recommendation information related to equipment recommended to the user, the recommendation information being created by the adviser and corresponding to the advice request;
a user interface display step of displaying the advice information on a display of the user terminal along with a user interface component configured to perform a purchase procedure of the equipment recommended in the recommendation information comprised in the advice information; and
a purchase procedure step of performing the purchase procedure of the recommended equipment in response to an operation of the user interface component by the user.

12. The motion analysis method according to claim 11, wherein
the equipment is used by the user to hit a moving body.

13. A control program for causing a computer to operate as the user terminal according to any one of claims 1 to 4, wherein
processing executed by the user terminal comprises
processing of displaying the advice information received from the adviser terminal on a display of the user terminal along with a user interface component configured to perform a purchase procedure of the equipment recommended in the recommendation information comprised in the advice information, and
processing of performing the purchase procedure of the recommended equipment in response to an operation of the user interface component by the user.

14. A control program for causing a computer to operate as the adviser terminal according to any one of claims 1 to 4, wherein
processing executed by the adviser terminal comprises
processing of presenting, to the adviser, the advice request transmitted from the user terminal along with the analysis result, and
processing of transmitting, to a predetermined destination, advice information comprising recommendation information of the equipment for the user, the recommendation information being created by the adviser and corresponding to the advice request.

15. A control program configured to cause a computer to operate as the server according to claim 9 or 10, wherein
processing executed by the server comprises
processing of, in response to receiving the advice request addressed to the adviser from the user terminal, transmitting the advice request to the adviser terminal,
processing of, in response to receiving the advice information addressed to a predetermined destination from the adviser terminal, transmitting the advice information to the predetermined destination, and
processing of receiving, from the user terminal that has received the advice information, equipment identification information for identifying the equipment recommended by recommendation information comprised in the advice information and for which a purchase procedure has been performed.

16. A computer readable recording medium recording the control program according to any one of claims 13 to 15.
